# EUROPÄISCHE PATENTSCHRIFT

(11) **EP 1 521 958 B1**
(45) Veröffentlichungstag und Bekanntmachung des Hinweises auf die Patenterteilung: **12.08.2009**
(21) Anmeldenummer: 03763809.5
(22) Anmeldetag: 10.07.2003
(51) Int. Cl.: G01N 21/31, G01N 21/64

(54) **BELEUCHTUNGSVORRICHTUNG UND OPTISCHE OBJEKTUNTERSUCHUNGSEINRICHTUNG**
ILLUMINATING DEVICE AND OPTICAL OBJECT-ANALYZING DEVICE
SYSTEME D'ECLAIRAGE ET DISPOSITIF OPTIQUE D'INSPECTION D'OBJETS

(30) Priorität: 12.07.2002 DE 10231667
(43) Veröffentlichungstag der Anmeldung: 13.04.2005
(73) Patentinhaber: Olympus Soft Imaging Solutions GmbH, 48149 Münster (DE)
(72) Erfinder: SEEL, Matthias, 80339 München (DE); SCHALLER, Klaus, (DE)
(74) Vertreter: Jordan, Volker Otto Wilhelm
(86) Internationale Anmeldenummer: PCT/EP2003/007513
(87) Internationale Veröffentlichungsnummer: WO 2004/008115

(56) Entgegenhaltungen:
- EP-A- 0 610 036
- US-A- 4 505 583
- US-A- 5 178 142
- US-A- 5 854 681
- US-B1- 6 364 829

## Beschreibung

Die Erfindung betrifft nach einem Aspekt eine Beleuchtungsvorrichtung, vorzugsweise für mikroskopische oder/und fluoreszenzbasierte Anwendungen.

Aus der DE 41 15 401 C2 ist eine Fluoreszenz-Messvorrichtung bekannt, die eine Beleuchtungsvorrichtung aufweist. Die Beleuchtungsvorrichtung der Fluoreszenz-Messvorrichtung weist zwei jeweils eine Lichtquelle aufweisende Beleuchtungseinheiten auf, von denen mindestens eine gepulst ist, sowie ein Beugungsgitter, das von den zwei Beleuchtungseinheiten so in seiner Eintrittsspaltebene beleuchtet wird, dass in seiner Austrittsspaltebene die beiden von den Beleuchtungseinheiten ausgehenden Strahlengänge vereinigt werden und dort in einen Strahlengang unter Bildung eines bichromatischen Intensitätszeitprofils unterschiedlicher Wellenlänge austreten. Die bekannte Fluoreszenz-Messvorrichtung dient gemäß den Angaben in der Patentschrift zur Bestimmung der Ionenkonzentration eines Untersuchungsobjekts, das mit einem Fluoreszenzfarbstoff eingefärbt ist, dessen Anregungsmaximum sich in Abhängigkeit von der zu bestimmenden Ionenkonzentration ändert. Mittels eines abbildenden Systems wird der Strahlengang mit dem bichromatischen Intensitätszeitprofil auf das Untersuchungsprojekt gelenkt. Es ist eine Detektoreinheit zur Umwandlung des vom Untersuchungsobjekt abgegebenen Fluoreszenzlichts in ein Messsignal vorhanden. Die beiden Beleuchtungseinheiten zeichnen sich dadurch aus, dass sie jeweils einen Lichtleiter aufweisen, dessen Eintrittsöffnung über ein abbildendes System mit Licht von der ihm zugeordneten Lichtquelle beaufschlagt wird und dessen Austrittsöffnung in der Eintrittsspaltebene des Beugungsgitters liegt. Die Austrittsöffnungen der Lichtleiter sind zur Einstellung der Wellenlängen des auf das Untersuchungsobjekt auftreffenden Lichts mit dem bichromatischen Intensitätszeitprofil relativ zueinander und zu dem Beugungsgitter verschiebbar. Betreffend den Aufbau der Beleuchtungseinheiten wird in Erwägung gezogen, dass diese zwei Blitzlampen als Lichtquellen aufweisen. Ferner wird in Erwägung gezogen, dass die zwei gepulsten Beleuchtungseinheiten jeweils eine kontinuierliche Lichtquelle und einen im Strahlengang zwischen dieser Lichtquelle und dem Beugungsgitter angeordneten ansteuerbaren Verschluss aufweisen. Ferner wird in Erwägung gezogen, dass die zwei gepulsten Beleuchtungseinheiten eine gemeinsame kontinuierliche Lichtquelle und zwei im Strahlengang zwischen dieser Lichtquelle und dem Beugungsgitter angeordnete, getrennt ansteuerbare Verschlüsse aufweisen.

Eine weitere Fluoreszenz-Messvorrichtung zum Bestimmen von Ionenkonzentrationen eines mit die Absorptions- oder Fluoreszenzeigenschaften in Abhängigkeit von der Ionenkonzentration ändernden Fluoreszenzfarbstoff angefärbten Untersuchungsobjekts ist aus der DE 42 28 366 C2 bekannt. Die Fluoreszenz-Messvorrichtung weist eine Beleuchtungsvorrichtung, eine Detektoreinheit zum Empfang des Fluoreszenzlichts und eine Auswerteeinrichtung auf. Die Beleuchtungsvorrichtung umfasst eine polychromatische Lichtquelle und Mittel zur Auswahl von vorgebbaren Wellenlängen in kurzem zeitlichen Abstand zur Fluoreszenzanregung oder zur gleichzeitigen Fluoreszenzanregung des Untersuchungsobjekts mit beliebig vorgebbarer Belichtungszeit für jede Wellenlänge und beliebig vorgebbaren Dunkelpausen. Als Mittel zur Auswahl der vorgebbaren Wellenlängen ist eine holographisches Volumengitter vorgesehen, das auf einem verstellbaren Scanner angeordnet ist, der zur Erzeugung der Wellenlängen und Einstellung der Belichtungszeit in die entsprechende Wellenlängenposition und zur Einstellung der Dunkelpausen in eine das System nicht anregende Wellenlängenposition einstellbar ist. Es wird erwogen, das Volumengitter als Reflektionsgitter zu betreiben.

Weitere bekannte Vorrichtungen, die als Beleuchtungsvorrichtung bzw. als Teil einer Beleuchtungsvorrichtung im Prinzip einsetzbar sind, sind aus der einen Monochromator beschreibenden US 5,285,254, der einen optischen Bandpassfilter beschreibenden US 3,907,430 und der einen Monochromator beschreibenden US 4,575,243 bekannt. Ferner wird auf die US 4,660,975 verwiesen.

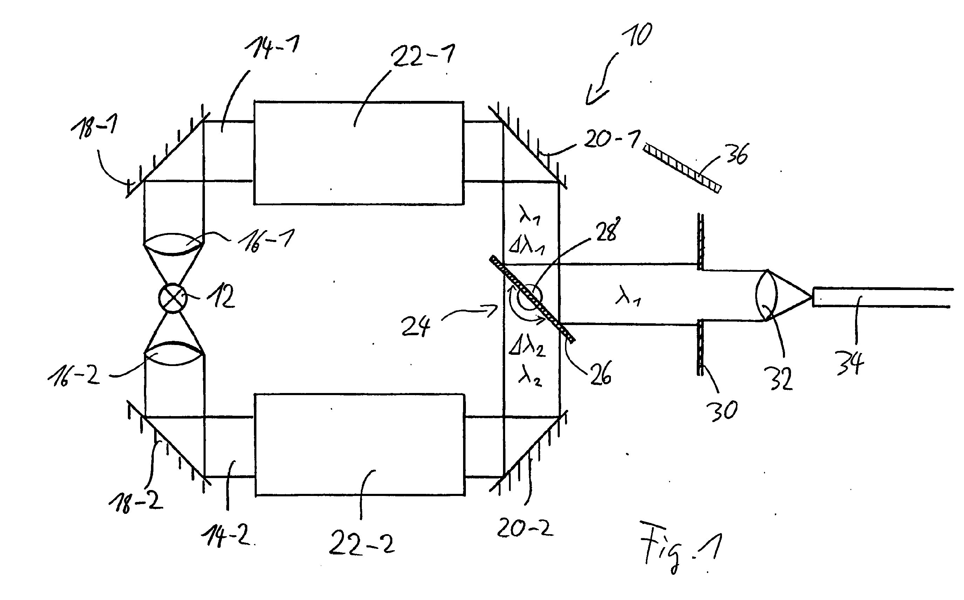

Die US-A-4505583 zeigt in Fig. 1 einen zwischen zwei momentanen Betriebsstellungen durch Hin- und Herschwingen verstellbaren Spiegel 5, der als Lichtwegauswahleinheit aufgefasst werden kann. Ferner zeigt die Fig. 17 einen rotierenden Zylinder 123 mit einem Schlitz, so dass das aus einer Lichtquelle emittierte Licht hintereinander auf verschiedene optische Lichtfaser trifft.

Die US-A-6364829 offenbart die Verwendung von zwei rotierenden Scheiben 808 und 810, um abwechselnd einen Lichtwegausgang mit jeweils einem Lichtwegeingang zu verbinden. In der US-A-5178142 wird das Umschalten zwischen zwei Lichtwegeingängen durch einen Polarisator erreicht.

Aufgabe der Erfindung ist, eine Beleuchtungsvorrichtung und eine optische Untersuchungsvorrichtung bereitzustellen, die das gesteuerte Beleuchten etwa eines Untersuchungsobjekts mit Beleuchtungslicht ermöglicht, wobei wenigstens ein Parameter des Lichts oder wenigstens eine Eigenschaft des Lichts gesteuert veränderbar ist. Es wird beispielsweise an ein Beleuchten mit unterschiedlichen Wellenlängen oder/und unterschiedlichen Intensitäten gedacht.

Zur Lösung dieser Aufgabe wird eine Beleuchtungsvorrichtung gemäß Anspruch 1 und eine optische Objektuntersuchungsvorrichtung gemäß Anspruch 21 angegeben.

Die Beleuchtungsvorrichtung umfasst:
- eine Lichtquelle;
- optische Komponenten, die eine Mehrzahl von von der Lichtquelle ausgehenden Lichtwegen definieren;
- in wenigstens einem der Lichtwege eine Lichtkonditionieranordnung,
- wenigstens einen Lichtausgang, an dem eine zugeordnete, mit Licht bzw. konditioniertem Licht zu versorgende Vorrichtung, beispielsweise ein Mikroskop oder eine Fluoreszenz-Messvorrichtung, angeschlossen oder anschließbar ist;
- wenigstens eine Lichtwegauswahleinheit, die mehrere jeweils einem anderen der Lichtwege zugehörige Eingangslichtwegabschnitte und wenigstens einen zu dem Lichtausgang bzw. zu einem zugeordneten der Lichtausgänge führenden Ausgangslichtwegabschnitt aufweist, wobei mittels der zwischen mehreren Auswahlzuständen verstellbaren Lichtwegauswahleinheit wahlweise jeder der Lichtwege in einem entsprechenden Auswahlzustand der Lichtwegauswahleinheit als ausgewählter Lichtweg über den Ausgangslichtwegabschnitt mit dem Lichtausgang oder über einen vorgegebenen oder ausgewählten Ausgangslichtwegabschnitt mit einem vorgegebenen oder ausgewählten Lichtausgang verbindbar ist.

Die Steuerung der Beleuchtung erfolgt auf Grundlage von mehreren Lichtwegen, von denen wenigstens einer eine Lichtkonditionieranordnung aufweist. Die Lichtkonditionieranordnung kann beispielsweise das in den Lichtweg einfallende Licht hinsichtlich Zentralwellenlänge oder/und spektrale Bandbreite oder/und Gesamtphotonenfluss (Intensität) konditionieren. Durch Auswahl eines Lichtwegs mittels der Lichtwegauswahleinheit wird das entsprechend konditionierte bzw. unkonditionierte Licht, das aus diesem Lichtweg einfällt, mit dem Lichtausgang bzw. einem vorgegebenen oder ausgewählten mehrerer Lichtausgänge verbunden und damit für die Beleuchtung bereitgestellt. Eine gesteuerte Änderung des am Ausgang bereitgestellten Lichts, etwa hinsichtlich wenigstens eines der genannten Parameter und Eigenschaften, erfolgt durch Umschalten zu einem anderen, dann ausgewählten Lichtweg. Da dieser Lichtweg von vornherein entsprechend konditioniertes, insbesondere anders konditioniertes Licht bzw. unkonditioniertes Licht bereitstellt und nur noch mit dem Lichtausgang verbunden werden muss, sind kurze Steuerzeiten für die Umsteuerung des Beleuchtungslichts möglich, die sich nämlich nur als reine Umschaltzeiten für die Umschaltung zwischen den Lichtwegen darstellen.

Eine derartige Beleuchtungseinrichtung ist vielfältig einsetzbar, etwa zum Beleuchten bei mikroskopgestützten Verfahren, insbesondere zur Anregung von Fluoreszenzmolekülen in biologischen Untersuchungsobjekten. Sind zwei oder mehr Ausgänge vorhanden, sind besonders vielfältige Anwendungen möglich.

Betreffend fluoreszenzbasierte Untersuchungsverfahren wird insbesondere an sich auf biologische Zellen beziehende Untersuchungen bzw. Messverfahren gedacht. Interessant ist beispielsweise, die räumliche Verteilung von für den Zellmetabolismus einer lebenden Zelle wichtigen Ionen (Magnesium, Kalium und Chlorid, insbesondere aber Kalzium) zu registrieren. Es existieren die Zellfunktion nicht beeinträchtigende Farbstoffe (Fluoreszenzindikatoren), die ihr Fluoreszenzverhalten in Abhängigkeit von den intrazellulären Ionenkonzentrationen ändern. Um unabhängig von der Konzentration des Farbstoffs in der angefärbten Zelle und der Zelldicke auf die Ionenkonzentration rückschließen zu können, kann man eine Verhältnismessung durchführen, bei welcher die Fluoreszenz bei zwei verschiedenen Anregungswellenlängen ermittelt wird.

Gedacht wird insbesondere auch an Anwendungen im Zusammenhang mit der GFP-Methode (Green-Fluorescence-Protein-Methode) und deren Abarten, die auf der Anregung von biologischen Zellen selbst produzierten Farbstoffen beruht.

Von großem Interesse ist auch, während einer Messung für kurze Zeit mit UV-Licht anzuregen (beispielsweise bei etwa 360 nm) und damit die Photolyse einer so genannten "Käfigverbindung" ("Caged Compound") auszulösen. Mittels derartiger Verbindungen können mittels der UV-Lichteinwirkung beispielsweise gezielt Ionen (z. B. Kalzium) oder zellaktive Substanzen (etwa ATP oder zyklische Nukleotide) freigesetzt werden, beispielsweise um zellinterne Regelprozesse gezielt und ggf. stoßförmig anzuregen oder Zellkanäle zu öffnen. Die erfindungsgemäße Beleuchtungsvorrichtung kann vorteilhaft dafür ausgelegt sein, derartige Messungen und Untersuchungen bzw. Lichtanregungen durchzuführen.

Die erfindungsgemäße Beleuchtungsvorrichtung ermöglicht es, auf einer Beleuchtung basierende Messungen besonders rasch und flexibel durchzuführen, z. B. bei mehreren Wellenlängen und verschiedenen Intensitäten, ggf. mit einem vorgegebenen, definierten zeitlichen Abstand, ein Untersuchungsobjekt zu beleuchten, beispielsweise durch Einbringen des Beleuchtungslichts in ein Mikroskop.

Bei der Lichtquelle handelt es sich vorzugsweise um eine breitbandige, kontinuierlich oder gepulst arbeitende Lichtquelle. Als breitbandige Lichtquelle kann beispielsweise eine Entladungslampe, beispielsweise eine Xenon-Lampe, vorgesehen sein. Der von der Lichtquelle emittierte Photonenstrom wird pro Lichtweg über eine geeignete, dem Fachmann verfügbare optische Anordnung (beispielsweise Reflektor und Sammeloptik) gesammelt und als Lichtbündel in den Lichtweg gesandt, beispielsweise über einen Einzelspalt oder eine entsprechende Öffnung. Es kann eine Lichtquelle verwendet werden, die in einen großen Raumwinkel emittiert. Es ist dann bevorzugt, dass in verschiedene Richtungen bzw. Raumwinkel gehende Photonenflüsse der Lichtquelle jeweils gesondert gesammelt werden. In den einzelnen Lichtwegen erfolgt dann die Lichtkonditionierung entsprechend der gewünschten Beleuchtung, je nach Anwendung.

Bevorzugt ist die Lichtwegauswahleinheit in wenigstens einen Auswahlzustand verstellbar, in dem kein Lichtweg ausgewählt ist, so dass keiner der Lichtwege mit dem bzw. mit einem Lichtausgang verbunden ist. Diese Ausgestaltung der Beleuchtungsvorrichtung schafft die Möglichkeit, definierte Dunkelpausen in der Beleuchtung vorzusehen.

Die Lichtwegauswahleinheit weist wenigstens ein zwischen mehreren Auswahlstellungen verstellbares optisches Lichtablenkelement auf. In diesem Zusammenhang wird vorgeschlagen, dass jeder Auswahlzustand auf Grundlage wenigstens einer Auswahlstellung des Lichtablenkelements realisierbar ist, indem im jeweiligen Auswahlzustand über den zugeordneten ausgewählten Lichtweg einfallendes Licht in den Ausgangslichtwegabschnitt bzw. in den vorgegebenen oder ausgewählten Ausgangslichtwegabschnitt umgelenkt wird und über den bzw. einen jeweiligen nicht-ausgewählten Lichtweg einfallendes Licht nicht in den bzw. in keinen Ausganglichtwegabschnitt umgelenkt wird.

Die Lichtwegauswahleinheit kann wenigstens einen mittels eines Stellglieds schwenkbar oder drehbar angeordneten Spiegel umfassen. Der Spiegel ist mittels des Stellglieds in verschiedene Schwenk- oder Drehstellungen verstellbar, die jeweils einen Winkelbereich bzw. Raumwinkelbereich definieren, über den der Spiegel Photonen eines jeweils zugeordneten Lichtweg empfängt und definiert in den Ausgangslichtwegabschnitt bzw. den vorgegebenen oder ausgewählten Ausgangslichtwegabschnitt umlenkt und damit dem Lichtausgang bzw. dem vorgegebenen oder ausgewählten Lichtausgang zuführt. Bevorzugt ist das Stellglied als Galvanometer ausgeführt, um kurze Schalt- bzw. Steuerzeiten zu ermöglichen.

Vielfältige Möglichkeiten ergeben sich dann, wenn die Lichtwegauswahleinheit wenigstens eine mikromechanische Verstellspiegelanordnung mit einer Vielzahl von mikromechanischen Verstellspiegeln aufweist. Es wird hierbei an Verstellspiegelanordnungen gedacht, die auf elektrischem Wege ansteuerbar sind, um die Verstellspiegel oder ausgewählte der Verstellspiegel zwischen mehreren Auswahlstellungen zu verstellen. Entsprechende Halbleiter-Chips wurden von der Firma Texas Instruments auf den Markt gebracht und haben die so genannte DMD/DLP (Digital Light Processing)-Technik begründet. Ein einzelner Halbleiter-Chip weist beispielsweise hunderttausende mikroskopisch kleine Spiegel auf, die auf elektrischem Wege bewegbar sind. Mittels einer zugeordneten Steuerelektronik kann von der Spiegelanordnung reflektiertes Licht für jeden einzelnen Spiegel (Bildpunkt) entweder in eine Optik oder ins "Abseits" gelenkt, um - bei herkömmlichen Anwendungen - etwa ein der Steuerelektronik eingegebenes Bild zu projezieren. Im Rahmen des hier gemachten Erfindungsvorschlags kann eine mikromechanische Verstellspiegelanordnung der angesprochenen Art derart verstellt werden, dass verschiedene Einfallwinkelbereiche, insbesondere Einfallraumwinkelbereiche, die jeweils einem Lichtweg zugeordnet sind, ausgewählt und dass das hierüber aus dem Lichtweg einfallende Licht definiert in den Ausgangslichtwegabschnitt bzw. einen vorgegebenen oder ausgewählten mehrerer Ausgangslichtwegabschnitte umgelenkt wird. In diesem Zusammenhang kann eine Steuerung der Intensität des weitergeleiteten Lichts beispielsweise dadurch erfolgen, dass die Zahl der an der Umlenkung beteiligten Verstellspiegel gesteuert verändert wird oder diese mit einem gewählten Tastverhältnis zwischen verschiedenen Stellungen umgesteuert werden. Es sei angemerkt, dass die Verstellspiegel als Schwenkspiegel ausgeführt sein können.

Wie sich aus den vorangehenden Ausführungen schon ergibt, kann die Lichtkonditionieranordnung eine optische Wellenlängenselektionsanordnung umfassen, mittels der wenigstens eine vorgegebene oder einstellbare Selektionswellenlänge, vorzugsweise genau eine vorgegebene oder einstellbare Selektionswellenlänge, mit einer vorgegebenen oder einstellbaren Selektionsbandbreite für eine Propagation in Richtung zur Lichtwegauswahleinheit selektierbar ist. Es wird insbesondere daran gedacht, dass in jedem der Lichtwege eine eine jeweilige Wellenlängenselektionsanordnung umfassende Lichtkonditionieranordnung vorgesehen ist, mittels der in den Lichtwegen unterschiedliche Selektionswellenlängen für eine Propagation in Richtung zur Lichtwegauswahleinheit selektierbar sind.

Die (jeweilige) Wellenlängenselektionsanordnung kann beispielsweise einen geeigneten Lichtfilter oder eine Monochromator-Anordnung (beispielsweise Czerny-Turner-Gitter-Monochromator) umfassen.

Ferner kann die (jeweilige) Lichtkonditionieranordnung eine optische Polarisatoranordnung umfassen, um eine Selektion bezüglich der Polarisation vorzusehen.

Ferner kann die Lichtkonditionieranordnung eine verstellbare optische Intensitätsabschwächungsanordnung oder Strahlenbündelabschattungsanordnung umfassen, um eine Ausgangsintensität am (jeweiligen) Lichtausgang einstellen zu können. Die Intensitätssteuerung kann beispielsweise auf Grundlage üblicher Graufilter oder verstellbarer Blenden erfolgen. Es wird beispielsweise an eine drehbare Abschatteinheit gedacht, die Bereiche unterschiedlich starker Schwärzung bzw. Transmission aufweist. Je nach Stellung der Abschatteinheit wird das durch sie hindurchgehende Lichtbündel mehr oder weniger stark abgeschattet, so dass am Ausgang eine entsprechend erhöhte oder erniedrigte Intensität bereitgestellt wird. Es kann eine Homogenisierungseinrichtung vorgesehen sein, um für eine homogene Beleuchtung trotz partieller Abschattung des jeweiligen Strahlenbündels zu sorgen. Eine derartige Homogenisierung kann durch einen nachgeschalteten Lichtleiter vorgenommen werden, wobei insbesondere an einen gemäß einer bevorzugten Ausgestaltung ohnehin vorgesehenen Lichtleiter gedacht wird, der das Beleuchtungslicht zu einer zugeordneten optischen Vorrichtung, etwa Mikroskop, führt. Man kann die einzelnen Bereiche der Abschatteinheit als diskrete Bereiche oder als kontinuierlich sich in der Art eines Verlaufsfilters ändernde Bereiche auslegen. Letzteres ermöglicht eine kontinuierliche Intensitätssteuerung/regelung.

Zur Steuerung/Regelung der Intensität des Beleuchtungslichts sei noch darauf hingewiesen, dass diese auch vermittels der Lichtwegauswahleinheit erfolgen kann, wie anhand der mikromechanischen Verstellspiegelanordnung schon erläutert. Auch bei andersartigen Lichtwegauswahleinheiten, beispielsweise bei einem schwenkbar oder drehbar angeordneten Spiegel, ist eine entsprechende Beeinflussung der Intensität möglich, beispielsweise indem das aus einem Lichtweg einfallende Licht ganz oder teilweise auf eine Blende gelenkt wird oder vollständig in den betreffenden Ausgangslichtwegabschnitt umgelenkt wird.

Vorteilhaft kann man wenigstens eine der Lichtwegauswahleinheit zugeordnete Lichtfalle vorsehen, mit der ein nicht ausgewählter Lichtweg über die Lichtwegauswahleinheit verbindbar ist. Hierdurch kann für den "ausgeschalteten Zustand" der Beleuchtungsvorrichtung eine sehr niedrige Hintergrundintensität erreicht werden, was beispielsweise für fluoreszenzmikroskopische Anwendungen wichtig ist. Eine andere Möglichkeit ist, einen schnellen optischen Verschluss (allgemein eine optische Verschlussanordnung) in wenigstens einem der Lichtwege oder Lichtwegabschnitte vorzusehen.

Eine zweckmäßige Ausführungsform der Beleuchtungsvorrichtung zeichnet sich dadurch aus, dass genau ein Lichtausgang vorgesehen ist, mit dem mittels der Lichtwegauswahleinheit vorzugsweise genau ein ausgewählter der Lichtwege verbindbar ist.

Vielfältige Möglichkeiten beispielsweise im Zusammenhang mit fluoreszenzmikroskopischen Untersuchungen ergeben sich dann, wenn wenigstens zwei Lichtausgänge vorgesehen sind. Hierzu wird speziell vorgeschlagen, dass mittels der Lichtwegauswahleinheit oder mittels wenigstens zwei gesonderten Lichtwegauswahleinheiten gleichzeitig wenigstens zwei ausgewählte Lichtwege mit einem jeweiligen der Lichtausgänge verbindbar sind.

Man kann vorsehen, dass wenigstens zwei Lichtwegauswahleinheiten in einander zugeordnete Auswahlzustände verstellbar sind, derart, dass ein ausgewählter der Lichtwege über diese Lichtwegauswahleinheiten mit dem Lichtausgang bzw. einem vorgegebenen oder ausgewählten Lichtausgang verbunden ist.

Besonders bevorzugt sind mehr als zwei, beispielsweise wenigstens drei Lichtwege vorgesehen, beispielsweise um mehr als zwei (vorzugsweise wenigstens drei) unterschiedliche Beleuchtungswellenlängen für die Auswahl bereitzuhalten.

Zur Definition der Lichtwege können verschiedenartigste optische Komponenten, insbesondere reflektive Komponenten oder/und refraktive Komponenten oder/und defraktive Komponenten, verwendet werden. Es wird insbesondere an Spiegel oder/und Linsen oder/und Blenden gedacht. Man kann durchaus in Erwägung ziehen, die Lichtwege zwischen der Lichtquelle und der Lichtwegauswahleinheit zumindest teilweise durch Lichtleiter (etwa Glasfasern oder Glasfaserbündel) zu bilden. Demgegenüber ist es aber bevorzugt, dass die Lichtwege zumindest zwischen der Lichtquelle und der Lichtwegauswahleinheit als nicht an ein den Lichtweg definierendes Medium gebundene Freistrahlungs-Lichtwege ausgeführt sind.

Für eine einfache Handhabung und einen einfachen Anschluss der Beleuchtungsvorrichtung an einer zugeordneten optischen Vorrichtung ist es generell bevorzugt, dass der Lichtausgang bzw. die Lichtausgänge auf Grundlage eines (jeweiligen) Lichtleiters gebildet sind.

Die Beleuchtungsvorrichtung weist bevorzugt eine die wenigstens eine Lichtwegauswahleinheit und gewünschtenfalls die Lichtkonditionieranordnung oder Lichtkonditionieranordnungen ansteuernde Steuereinheit auf.

Die Steuereinheit ist dafür ausgelegt, definierte Verstellzeiten für die Verstellung der Lichtauswahleinheit zwischen ihren Auswahlzuständen vorzusehen. Beispielsweise wird daran gedacht, dass ein Wechsel von einem Lichtweg zum anderen in etwa 0,1 bis 2 ms oder sogar noch schneller durchgeführt wird bzw. werden kann. Derartige Umschaltzeiten lassen sich ohne weiteres auf Grundlage etwa eines Galvometers als Stellglied bzw. auf Grundlage der mikromechanischen Verstellspiegelanordnung realisieren.
Die Beleuchtungsvorrichtung wird damit beispielsweise für Anwendungen in der biologischen Mikroskopie tauglich, bei der mehrere verschiedenen Wellenlängen, beispielsweise zwei verschiedene Wellenlängen, zeitlich sehr kurz nacheinander (in wenigen ms) in ein Mikroskop einzukoppeln sind. Im Falle des mittels eines Galvanometers schwenkbaren bzw. drehbaren Spiegels wird man in diesem Zusammenhang die zugeordnete Optik so auslegen, dass der Spiegel vergleichsweise klein ausgeführt werden kann und dementsprechend nur ein kleines Trägheitsmoment zu überwinden ist mit entsprechend kurzen Verstellzeiten.

Messungen bzw. Untersuchungen hoher Komplexität lassen sich zuverlässig und wiederholbar dann durchführen, wenn die Steuereinheit dafür ausgelegt ist, die Lichtauswahleinheit nach wenigstens einem vorgegebenen oder vorgebbaren Auswahlprogramm zwischen ihren Auswahlzuständen zu verstellen.

Die optische Objektuntersuchungseinrichtung umfasst einen Objektbereich, in dem ein zu untersuchendes Objekt plazierbar ist, einen Beobachtungsstrahlengang, der vom Objektbereich zu einem Bildbereich führt, und wenigstens einen sich an einen Lichteingang anschließenden Beleuchtungsstrahlengang, über den der Objektbereich beleuchtbar ist. Für diese Objektuntersuchungseinrichtung wird vorgeschlagen, dass sie eine erfindungsgemäße Beleuchtungsvorrichtung wie vorangehend beschrieben aufweist, die mit einem Lichtausgang am Lichteingang angeschlossen oder anschließbar ist.

Wenn hier einerseits ein Lichteingang der Objektuntersuchtungseinrichtung und andererseits ein Lichtausgang der Beleuchtungsvorrichtung angesprochen ist, so ist es nicht zwingend, dass eindeutig ein Eingang und ein Ausgang identifizierbar sind. Es kann sich um eine sowohl als Eingang als auch als Ausgang identifizierbare "Übergabestelle" (beispielsweise Spalt oder Öffnung) oder um ein jeweiliges Ende eines Verbindungslichtleiters handeln.

Die Objektuntersuchungseinrichtung kann wenigstens einen Auflicht-Beleuchtungsstrahlengang, vorzugsweise wenigstens zwei Auflicht-Beleuchtungsstrahlengänge aufweisen. Der bzw. der jeweilige Auflicht-Beleuchtungsstrahlengang kann zumindest teilweise mit dem Beobachtungsstrahlengang zusammenfallen. Ferner kann die Objektuntersuchungseinrichtung wenigstens einen Durchlicht-Beleuchtungsstrahlengang aufweisen.

Eine bevorzugte Ausgestaltung der Objektuntersuchungseinrichtung zeichnet sich dadurch aus, dass sie wenigstens zwei, vorzugweise wenigsten drei Beleuchtungsstrahlengänge aufweist, die alternativ oder - vorzugsweise - gleichzeitig mit Beleuchtungslicht von der Beleuchtungsvorrichtung versorgbar sind.

Die Objektuntersuchtungseinrichtung umfasst ein Mikroskop, dass den Objektbereich, den Beobachtungsstrahlengang und den wenigstens einen Beleuchtungsstrahlengang umfasst. Eine weitere Möglichkeit ist, dass die Objektuntersuchungseinrichtung eine Fluoreszenz-Messvorrichtung umfasst, die den Objektbereich, den Beobachtungsstrahlengang und den wenigstens einen Beleuchtungsstrahlengang, sowie das angesprochene Mikroskop umfasst. Die Objektuntersuchungseinrichtung kann insgesamt als Fluoreszenz-Messvorrichtung bzw. als Mikroskop identifizierbar sein.

Die Erfindung wird im Folgenden anhand von in den Figuren gezeigten Ausführungsbeispielen näher erläutert.
- Fig. 1: zeigt ein erstes Ausführungsbeispiel einer erfindungsgemäßen Beleuchtungsvorrichtung, die zwei mittels einer Lichtwegauswahleinheit auswählbare Lichtwege, in denen jeweils eine Lichtkonditionieranordnung angeordnet ist, und einen Lichtausgang aufweist.
- Fig. 2: zeigt eine in der Konfiguration im Wesentlichen dem Beispiel der Fig. 1 entsprechende Beleuchtungsvorrichtung in Kombination mit einem Mikroskop, wobei die Beleuchtungsvorrichtung und das Mikroskop als Beispiel einer erfindungsgemäßen optischen Objektuntersuchtungseinrichtung identifizierbar sind.
- Fig. 3: zeigt ein weiteres Beispiel einer erfindungsgemäßen Beleuchtungsvorrichtung, die drei Lichtwege und einen Lichtausgang ausweist, wobei mittels einer Lichtwegauswahleinheit wahlweise ein jeder der Lichtwege mit dem Lichtausgang verbindbar ist.
- Fig. 4: zeigt ein Beispiel einer erfindungsgemäßen Beleuchtungsvorrichtung mit zwei Lichtwegen und zwei Lichtausgängen, wobei wahlweise ein jeder der Lichtwege mit einem ausgewählten der Lichtausgänge verbindbar ist, zu einem Zeitpunkt aber nur ein Lichtausgang als ausgewählter Lichtausgang Licht aus einem der Lichtwege empfangen kann.
- Fig. 5: zeigt ein Ausführungsbeispiel einer erfindungsgemäßen Beleuchtungseinrichtung mit drei Lichtwegen und zwei Lichtausgängen, bei der auf Grundlage von zwei Lichtwegauswahleinheiten gleichzeitig alle beide Lichtausgänge Licht von einem jeweils zugeordneten (ausgewählten) der Lichtwege empfangen können.
- Fig. 6: zeigt eine als Lichtkonditionieranordnung oder Teil einer Lichtkonditionieranordnung einsetzbare Strahlenbündelabschattungsanordnung auf Grundlage eines drehbaren Abschattungsrads.
- Fig. 7: zeigt eine optische Fluoreszenzmikroskopieanordnung mit zwei Auflicht-Beleuchtungsstrahlengängen und einem Durchlicht-Beleuchtungsstrahlengang, denen von einer erfindungsgemäßen Beleuchtungsvorrichtung Beleuchtungslicht zuführbar ist. Die Beleuchtungsvorrichtung und die Fluoreszenzmikroskopieanordnung können in Kombination als Beispiel einer erfindungsgemäßen Objektuntersuchtungseinrichtung aufgefasst werden.
- Fig. 8: zeigt eine Abwandlung der Fluoreszenzmikroskopieanordnung der Fig. 7, bei der in einer Zwischenbildebene des einen Auflicht-Beleuchtungsstrahlengangs Blenden oder/und Masken angeordnet werden können, um definierte Teilbereiche eines Objektbereichs beleuchten zu können.

Fig. 1 zeigt ein erstes Beispiel einer erfindungsgemäßen Beleuchtungsvorrichtung 10, die zwei von einer gemeinsamen Lichtquelle 12 ausgehende Lichtwege 14-1 und 14-2 aufweist. Zur Definition der Lichtwege dient eine jeweilige Linsenanordnung 16-1 bzw. 16-2 (jeweils umfassend wenigstens eine Linse) und zwei Umlenkspiegel 18-1, 20-1 bzw. 18-2, 20-2. Beim Ausführungsbeispiel sind die Umlenkspiegel in Bezug auf die Lampe 12 und in Bezug aufeinander derart angeordnet, dass die Umlenkspiegel jeweils eine Umlenkung um etwa 90° vorsehen und die Lichtwege 14-1 und 14-2 bereichsweise zueinander im Wesentlichen parallel sind. Eine derartige Anordnung ist aber nicht zwingend.

In den beiden Lichtwegen 14-1 und 14-2, vorliegend speziell in einem jeweiligen, zwischen den Umlenkspiegeln 18-1 und 20-1 bzw. 18-2 und 20-2 sich erstreckenden Lichtwegabschnitt, ist jeweils eine Lichtkonditionieranordnung 22-1 bzw. 22-2 enthalten, die das von der Lampe bzw. Lichtquelle 12 her einfallende Licht im Hinblick auf wenigstens einen Parameter bzw. eine Lichteigenschaft konditioniert, beispielsweise eine Wellenlängenselektion vornimmt. Beim gezeigten Ausführungsbeispiel erfolgt eine Wellenlängenselektion, und die dementsprechend als Wellenlängenselektionsanordnung ausgeführte bzw. eine Wellenlängenselektionsanordnung umfassende Lichtkonditionieranordnung 22-1 lässt Licht bei einer Zentralwellenlänge λ₁ mit einer Durchlassbandbreite Δλ₁ durch. Entsprechendes gilt für die als Wellenlängenselektionsanordnung ausgebildet bzw. eine Wellenlängenselektionsanordnung umfassende Lichtkonditionieranordnung 22-2, die Licht bei einer Zentralwellenlänge λ₂ mit einer Durchlassbandbreite von Δλ₂ durchlässt. Die Zentralwellenlängen λ₁ und λ₂ können vergleichsweise weit auseinander liegen oder auch vergleichsweise dicht beieinander liegen, beispielsweise nur 20 nm auseinander sein. Man kann die Wellenlängenselektionsanordnungen dafür ausbilden, dass das durchgelassene Licht sehr schmalbändig ist, beispielsweise um gezielt spezielle atomare oder molekulare Übergänge anzuregen.

Als Lichtquelle kann beispielsweise eine breitbandige Entladungslampe, beispielsweise Xenon-Lampe, verwendet werden.

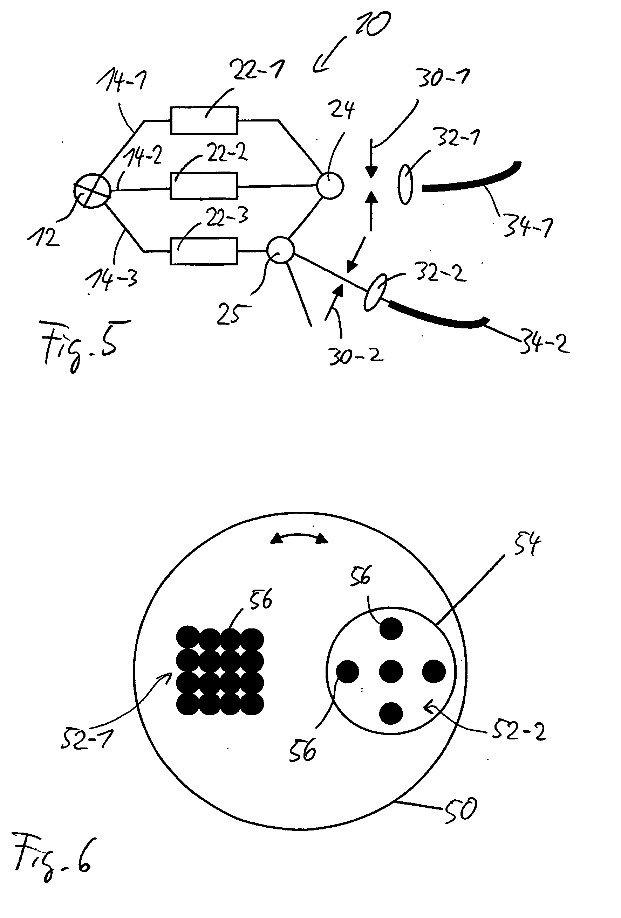

Die Lichtkonditionieranordnungen können vorteilhaft noch weitere Lichtbeeinflussungs- bzw. Konditionierungselemente enthalten, beispielsweise Polarisatoren zur Bereitstellung von polarisiertem Licht, Graufilter oder allgemein Intensitätsabschwächer oder Strahlenbündelabschatter zur Steuerung der durchgelassenen Photonenmenge und damit der Intensität. In Betracht kommt beispielsweise die Verwendung einer Strahlenbündelabschattungsanordnung entsprechend dem Beispiel der Fig. 6.

Die Wellenlängenselektionsanordnungen können beispielsweise von einem geeigneten Spektralfilter oder einer Monochromator-Anordnung gebildet sein. Bevorzugt ist, dass die selektierte Wellenlänge und idealerweise auch noch die Durchlassbandbreite einstellbar ist. Verwendung kann beispielsweise ein Czerny-Turner-Gitter-Monochromator als Wellenlängenselektionsanordnung finden.

Durch die Umlenkspiegel 20-1 und 20-2 wird das aus der jeweiligen Lichtkonditionieranordnung 22-1 bzw. 22-2 austretende Licht in Richtung zu einer Lichtwegauswahleinheit 24 gerichtet, die beim Ausführungsbeispiel der Fig. 1 von einem drehbar gelagerten Spiegel 26 und einer zugehörigen Stellglied 28 gebildet ist und mittels einer zugehörigen Steuerelektronik ansteuerbar ist. Das Stellglied 28 ist bevorzugt als Galvanometer ausgeführt, um den Spiegel mit kurzen Stellzeiten zwischen verschiedenen Auswahl-Drehstellungen verstellen zu können. Der Spiegel 26 und die gesamte übrige Optik der Beleuchtungsvorrichtung sind hierzu bevorzugt derart in Bezug aufeinander ausgeführt, dass ein Spiegel mit vergleichsweise geringer Reflektionsfläche und dementsprechend geringer Trägheitsmasse verwendbar ist. Eine andere Möglichkeit ist die Verwendung eines Linearaktuators, der beispielsweise über ein Getriebe auf einen Drehspiegel oder auf eine linear verschiebbare Spiegelanordnung wirkt.

In einer in Fig. 1 gezeigten Auswahlstellung lenkt der Umlenkspiegel 26 der Lichtwegauswahleinheit 24 das von dem Umlenkspiegel 20-1 her einfallende Licht etwa um 90° um in Richtung zu einer Blende 30 und einer hinter der Blende angeordnete Einkoppeloptik 32, die das in die Einkoppeloptik 32 einfallende Licht mit möglichst großem Wirkungsgrad in einen den einzigen Lichtausgang der Beleuchtungsvorrichtung bildenden Leuchtleiter 34, z. B. eine Glasfaser, einkoppelt. Entsprechend führt die Glasfaser 34 (oder allgemein ein Lichtleiter oder ein Lichtleiterbündel 34) Licht mit der Mittelwellenlänge A, und der spektralen Bandbreite Δλ₁.

In einer weiteren Auswahlstellung, etwa entsprechend einer Drehung des Spiegels 26 um 90° gegenüber der Darstellung in Fig. 1, lenkt dieser das vom Umlenkspiegel 20-2 her einfallende Licht mit der Wellenlänge λ₂ und der Bandbreite Δλ₂ in Richtung zur Blende 30 und der Einkoppeloptik 32 hin um, um dieses Licht in den Lichtleiter 34 einzukoppeln. In den beiden jeweils einer Auswahl des Lichtwegs 14-1 bzw. 14-2 entsprechenden Auswahlstellungen fällt das aus dem jeweils anderen Lichtweg her einstrahlende Licht auf eine vorzugsweise als Lichtfalle ausgeführte Spiegelrückseite des Galvanometerspiegels 26. In wenigstens einer weiteren Auswahl-Drehstellung des Galvanometerspiegels 26 fällt das aus dem einen Lichtweg auf den Spiegel einfallende Licht auf oder in eine Lichtfalle 36 und das aus dem anderen Lichtweg einfallende Licht auf die nichtreflektierende, vorzugsweise lichtabsorbierend bzw. als Lichtfalle aufgeführte Rückseite des Galvanometerspiegels 26. In dieser Auswahlstellung des Galvanometerspiegels 26 wird kein Beleuchtungslicht in die Glasfaser 34 eingekoppelt, und die Lichtfallen gewährleisten eine geringe Hintergrundintensität in diesem Zustand. Entsprechende Wirkungen lassen sich auch mittels wenigstens einer Verschlussanordnung an geeigneter Stelle in der Beleuchtungsvorrichtung 10 erreichen, die im Hinblick auf gewünschte Schaltzeiten entsprechend schnell betätigbar sein sollte.

Die Lichtwegauswahleinheit kann auch auf Grundlage anderer dem Fachmann verfügbarer Komponenten aufgebaut sein. Es wird beispielsweise ein Mikro-Elektro-Mechanische-Systeme gedacht, die eine auf elektrischem Wege verstellbare Verstellspiegelanordnung aufweisen (vgl. DMD/DLP-Technologie).

Es soll angemerkt werden, dass die Lichtwegauswahleinheit unabhängig von ihrem Aufbau auch zur Intensitätssteuerung des über den Lichtleiter 34 bereitgestellten Lichts eingesetzt werden kann, indem das jeweilige Lichtbündel teilweise, mit einem gesteuerten Anteil, auf die Blende 30 umgelenkt wird, so dass dementsprechend weniger Photonen pro Zeiteinheit in den Lichtleiter 34 eintreten. Inhomogenitäten des am anderen Ende aus dem Lichtleiter austretenden Lichts sind nicht zu befürchten, da der Lichtleiter für eine Homogenisierung sorgt.

Mittels der erfindungsgemäßen Beleuchtungsvorrichtung kann über die beiden Lichtwege Licht mit für den einzelnen Lichtweg vorgewählten Parametern in einer gewählten Zeitabfolge der Einkoppeloptik 32 und damit über den Lichtleiter 34 einer angeschlossenen optischen Vorrichtung zur Verfügung gestellt werden. Es sollte ein sehr schneller Wechsel von einem Lichtweg zum anderen möglich sein, beispielsweise innerhalb von 0,2 bis 2 ms, um beispielsweise für biologische Anwendungen, insbesondere biologische Mikroskopie, verschiedene Wellenlängen zeitlich sehr kurz nacheinander (in wenigen ms aufeinander folgend) in eine entsprechende optische Einrichtung, insbesondere Mikroskop, einzukoppeln.

Die Lichtwege sind abgesehen von dem Ausgangs-Lichtleiter 34 als "Freistrahlungs-Lichtwege" ausgeführt, also nicht von Lichtleitern gebildet. Dies ermöglicht, das von der Lichtquelle 12 emittierte Licht über große Raumwinkelbereiche für die beiden Lichtwege zu sammeln, und vermeidet Einkoppelverluste in den Lichtleiter.

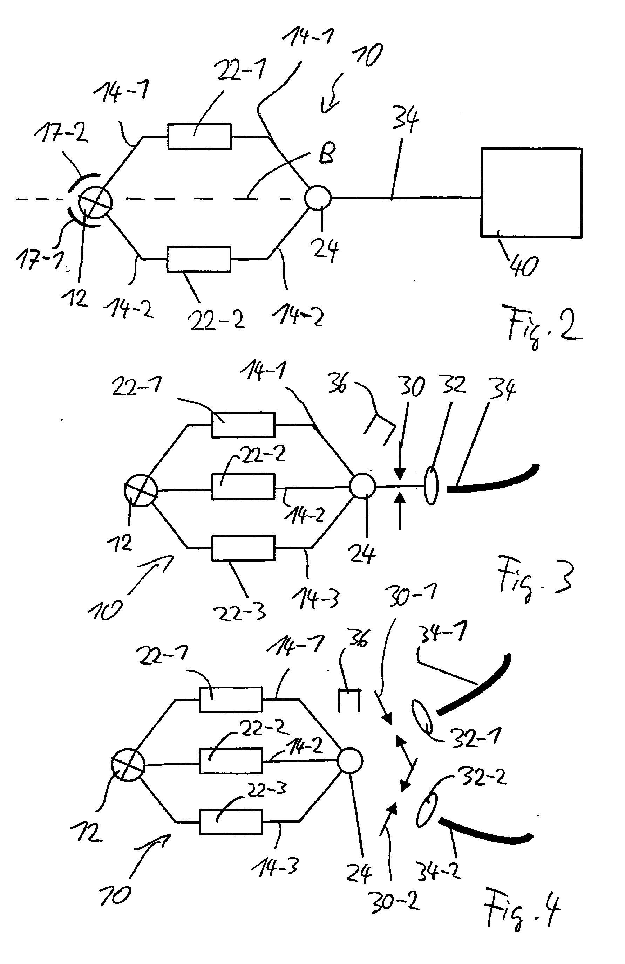

Fig. 2 zeigt schematisch eine Beleuchtungsvorrichtung 10 mit zwei Lichtwegen, die in ihrer Konfiguration im Wesentlichen dem Beispiel der Fig. 1 entsprechen kann. Von der Lichtquelle 12 gehen die beiden Lichtwege 14-1 und 14-2 aus, die durch die ggf. als "Lichtselektor" ausgeführten Lichtkonditionieranordnungen 22-1 bzw. 22-2 führen. Eine nur durch einen Kreis dargestellte Lichtwegauswahleinheit 24 wählt einen ausgewählten der beiden Lichtwege zur Verbindung mit dem als Lichtausgang dienenden Ausgangsleiter 34 aus, der entsprechendes Licht einer optischen Vorrichtung, vorliegend einem Mikroskop 40, zuführt.

In Fig. 2 sind schematisch noch den mit ihrer jeweiligen optischen Achse unter einem kleineren Winkel als 90° gegenüber einer Bezugsachse B von der Lichtquelle 12 ausgehenden Lichtwegen 14-1 und 14-2 zugeordnete Reflektoren 17-1 und 17-2 eingezeichnet, die in einen jeweiligen Raumwinkelbereich fallendes Licht der Lichtquelle 12, der zum Einfall-Raumwinkelbereich des jeweiligen Lichtwegs entgegengesetzt ist, in den betreffenden Einfall-Raumwinkelbereich reflektieren, um pro Lichtweg über einen entsprechend vergrößerten Raumwinkel das von der Lichtquelle 12 ausgehende Licht zu sammeln.

Im Folgenden werden anhand der Fig. 3 bis 5 weitere Ausführungsbeispiele von vorteilhaften Beleuchtungsvorrichtungen erläutert, wobei für analoge oder einander entsprechende Komponenten identische Bezugszeichen verwendet werden, die sich ggf. nur durch eine nach einem Bindestrich angehängte Zählzahl von den bisher verwendeten Bezugzeichen unterscheiden.

Fig. 3 zeigt eine vorteilhafte Ausführungsform mit drei Lichtwegen 14-1, 14-2 und 14-3, die jeweils durch eine Lichtkonditionieranordnung 22-1 bzw. 22-2 bzw. 22-3 führen. Mittels der Lichtwegauswahleinheit 24 ist jeder der Lichtwege für eine Einkopplung des einfallenden Lichts in den Lichtleiter 34 auswählbar. Zu einer Zeit kann nur ein Lichtweg hierfür ausgewählt sein.

Das Ausführungsbeispiel der Fig. 4 unterscheidet sich vom Ausführungsbeispiel der Fig. 3 dadurch, dass zwei jeweils als Lichtausgang dienende Lichtleiter 34-1 und 34-2 vorgesehen sind, denen jeweils eine Einkoppeloptik 32-1 bzw. 32-2 und eine davor angeordnete Blende 30-1 bzw. 30-2 zugeordnet ist. Beide Lichtausgänge 34-1 und 34-2 können mit Licht aus einem jeden der Lichtwege 14-1, 14-2 und 14-3 versorgt werden, indem die Lichtwegauswahleinheit 24 in entsprechende Auswahlstellungen oder - allgemeiner - Auswahlzustände verstellt wird. Es kann zu einem Zeitpunkt nur jeweils einer der Lichtausgänge mit Beleuchtungslicht versorgt werden.

Fig. 5 zeigt eine vorteilhafte Beleuchtungsvorrichtung, die ebenfalls drei Lichtwege 14-1, 14-2 und 14-3 mit einer jeweiligen Lichtkonditionieranordnung 22-1, 22-2 bzw. 22-3 aufweist. Wie die Beleuchtungsvorrichtung der Fig. 4 weist die Beleuchtungsvorrichtung der Fig. 5 zwei jeweils als Lichtausgang dienende Lichtleiter 34-1 und 34-2 mit zugeordneten Komponenten 30-1, 30-2, 32-1 und 32-2 auf, die mittels zwei Lichtwegauswahleinheiten 24 und 25 gleichzeitig mit Licht aus einem jeweiligen Lichtweg bedient werden können. Gemäß der in Fig. 5 schematisch gezeigten Konfiguration kann der Ausgang 34-1 mit Licht aus dem Lichtweg 14-1 oder 14-2 versorgt werden, während gleichzeitig der Ausgang 34-2 mit Licht aus dem Lichtweg 14-3 versorgt wird. Ferner kann die Lichtwegauswahleinheit 24 in einen ersten und einen zweiten Zustand verstellt werden, indem sie das aus dem Lichtweg 14-1 (erster Zustand) oder das aus dem Lichtweg 14-2 (zweiter Zustand) einfallende Licht in Richtung zur Lichtwegauswahleinheit 25 hin umlenkt, die in einem entsprechenden Auswahlzustand das auf sie einstrahlende Licht über die Einkoppeloptik 32-2 in den Ausgangsleiter 34-2 einkoppelt. Umgekehrt ist es möglich, den Lichtweg 14-3 über die Lichtwegauswahleinheit 25 und die Lichtwegauswahleinheit 24 mit dem Ausgangslichtleiter 34-1 zu verbinden. In den drei zuletzt erläuterten Zuständen der Beleuchtungsvorrichtung wird jeweils nur einer der Ausgangslichtleiter mit Licht aus dem betreffenden Lichtweg versorgt.

Es wurde hier eine Auslegung der Lichtwegauswahleinheit bzw. Lichtwegauswahleinheiten vorausgesetzt, nach der zu einem Zeitpunkt ein ausgewählter Lichtweg nur mit einem bestimmten bzw. ausgewählten der Lichtausgänge verbunden werden kann und nach der ein Lichtausgang zu einem Zeitpunkt Licht nur aus einem Lichtweg empfangen kann. Dies ist beispielsweise dann der Fall, wenn die Lichtwegauswahleinheit zum Umlenken einen verstellbaren Galvanometerspiegel oder dergleichen aufweist. Es ist dann nur eine alternierende Versorgung von zwei oder mehr Lichtausgängen mit dem Licht aus einem ausgewählten Lichtweg bzw. eine alternierende Versorgung eines Lichtausgangs mit Licht aus mehr als einem Lichtweg denkbar.

Es sind durchaus aber Auslegungen der Lichtwegauswahleinheit bzw. Lichtwegauswahleinheiten möglich, bei denen ein Teil des aus einem ausgewählten Lichtweg einstrahlenden Lichts in einen ersten Lichtausgang und ein anderer Teil des aus diesem Lichtweg einstrahlenden Lichts in wenigstens einen weiteren Lichtausgang eingekoppelt wird. Ferner ist es durchaus vorstellbar, dass ein Lichtausgang gleichzeitig Licht aus mehreren Lichtwegen empfängt. Es ist beispielsweise im Falle der angesprochenen mikromechanischen Spiegelanordnungen möglich, eine Teilmenge der mikroskopischen Verstellspiegel in eine erste, das Licht eines Lichtwegs in einen ersten Ausgang einkoppelnde Auswahlstellung und wenigstens eine weitere Teilmenge der mikromechanischen Spiegel in eine weitere, das Licht des gleichen Lichtwegs in einen anderen Ausgang einkoppelnde Auswahlstellung zu verstellen. Ferner könnte mittels entsprechender Teilmengen Licht aus mehreren Lichtwegen einem gemeinsam zugeordneten Lichtausgang zugeführt werden.

Fig. 6 zeigt eine als Drehscheibe ausgeführte Abschatteinheit 50, die vorteilhaft in einem Lichtweg als Lichtkonditionieranordnung oder Teil einer Lichtkonditionieranordnung einsetzbar ist. Die Drehscheibe 50 weist eine Mehrzahl von Feldern 52-1 und 52-2 auf, die durch Drehen der Scheibe in ein durch einen Kreis 54 repräsentiertes Lichtbündel des jeweiligen Lichtwegs verstellbar sind, um durch opake oder lichtundurchlässige Bereiche 56 das Strahlenbündel mehr oder weniger stark partiell abzuschatten. Im Falle einer Ausbildung der Beleuchtungsvorrichtung mit wenigstens einem Ausgangs-Lichtleiter wird für die notwendige Homogenität der Beleuchtung in der angeschlossenen optischen Vorrichtung durch den jeweiligen Lichtleiter gesorgt. Je nach Stellung der Scheibe 50 wird die bereitgestellte Intensität entsprechend der erfolgten Abschattung reduziert. Man kann die einzelnen Bereiche der Abschatteinheit diskret (wie in Fig. 6 dargestellt) oder in der Art eines Verlaufsfilters auslegen. Letzteres ermöglicht eine kontinuierliche Intensitätssteuerung.

Es soll darauf hingewiesen werden, dass man die erfindungsgemäße Beleuchtungsvorrichtung durchaus auch mit mehr als zwei Lichtausgängen, ggf. Ausgangslichtleitern, ausführen kann.

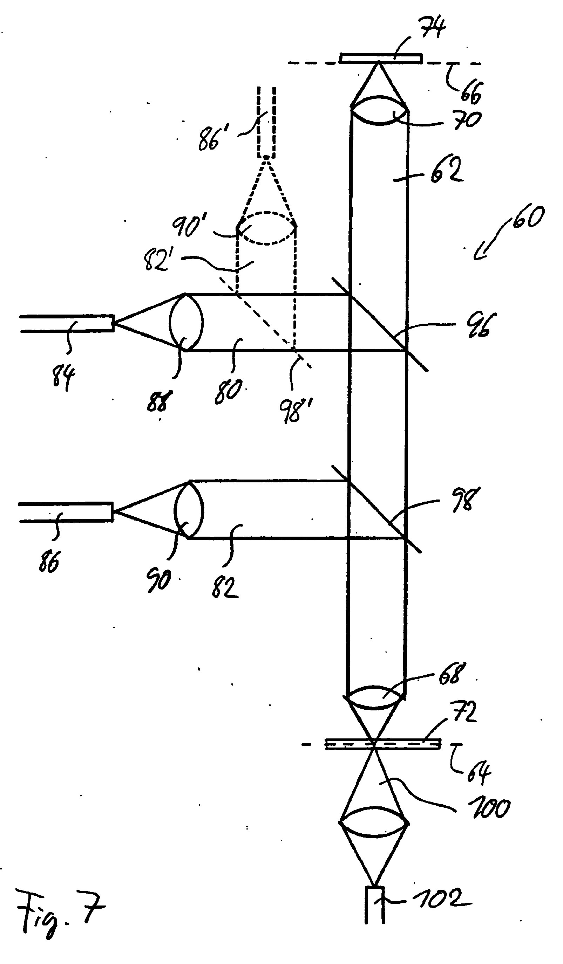

Eine vorteilhafte Anwendung für eine erfindungsgemäße Beleuchtungsvorrichtung soll im Folgenden anhand von Fig. 7 erläutert werden. Gezeigt ist eine Mikroskopanordnung 60, die beispielsweise für fluoreszenzmikroskopische Anwendungen vorgesehen ist. Es wird beispielsweise an Anwendungen gedacht, wie sie in den Patentschriften DE 41 15 401 C2 und DE 42 28 366 C2 angesprochen sind.

Die Mikroskopanordnung 60 weist einen Beobachtungsstrahlengang 62 auf, der eine Objektebene 64 in eine Bildebene 66 abbildet. Die Abbildung erfolgt mittels einer wenigstens zwei Linsen oder Objektive 68 und 70 aufweisenden Abbildungsanordnung, wie im Stand der Technik an sich bekannt. Für Messungen bzw. Untersuchungen kann in der Objektebene 64 ein Objekt bzw. Objektträger mit einem Objekt 72 angeordnet sein. In der Bildebene 66 kann eine Detektoranordnung, beispielsweise ein einzelner Detektor (etwa Halbleiterdetektor) oder - für zweidimensionale Auflösung - ein Detektorfeld, (etwa CCD-Chip) angeordnet sein. Ein entsprechender Detektor ist in Fig. 7 mit 74 bezeichnet.

Die Mikroskopanordnung der Fig. 7 weist zwei Auflicht-Beleuchtungsstrahlengänge 80 und 82 auf, die über einen jeweiligen Lichtleiter 84 bzw. 86 mit Beleuchtungslicht aus einer zugeordneten Beleuchtungsvorrichtung versorgt werden können. Bei den Lichtleitern 84 und 86 kann es sich beispielsweise um den Lichtleiter 34-1 und den Lichtleiter 34-2 der Beleuchtungsvorrichtung gemäß Fig. 4 oder Fig. 5 handeln. Eine andere Möglichkeit ist, dass entweder der Lichtleiter 84 oder der Lichtleiter 86 den Ausgangslichtleiter 34 gemäß den Beispielen der Fig. 1 bis 3 repräsentiert. Das aus dem jeweiligen Lichtleiter austretende Licht wird mittels einer geeigneten Abbildungsoptik (durch eine Linse 88 bzw. 90 repräsentiert) in den jeweiligen Beleuchtungsstrahlengang eingekoppelt, beispielsweise derart, dass eine so genannte "kritische Beleuchtung" erreicht wird, bei der das benötigte Gesichtsfeld gleichmäßig mit Licht aus dem jeweiligen Lichtleiter ausgeleuchtet wird. Hierzu wird das Austrittsende des jeweiligen Lichtleiters in die Objektebene 34 abgebildet. Es können auch andere Beleuchtungsarten, z. B. die so genannte Köhlersche Beleuchtung, realisiert sein.

Das Vorsehen der beiden bzw. wenigstens zwei Auflicht-Beleuchtungsstrahlengänge ermöglicht, das Objekt 72 gleichzeitig mit Licht zweier verschiedener Wellenlängen zu beleuchten. Beispielsweise kann mittels des Strahlengangs 80 das benötigte Gesichtsfeld gleichmäßig in Auflicht ausgeleuchtet werden (etwa die angesprochene "kritische Beleuchtung"). Über den Strahlengang 82 kann zusätzlich Licht einer anderen Wellenlänge in die Objektebene eingestrahlt werden, beispielsweise um im Objekt so genannte "Käfigverbindungen" zu aktivieren, so dass diese im "Käfig" bereitgehaltene Stoffe freisetzen, die beispielsweise Kanäle von biologischen Zellen im Sinne eines Öffnens schalten. Derartige Käfigverbindungen können durch Einstrahlung von UV-Licht gezielt aktiviert werden. Das zur Freisetzung der wirksamen Stoffe benötigte UV-Licht kann gemäß dem hier angesprochenen Beispiel über den Strahlengang 82 in die Objektebene 64 eingestrahlt werden, wobei es durchaus sinnvoll sein kann, ebenfalls eine "kritische Beleuchtung" der Objektebene mit dem UV-Licht vorzusehen.

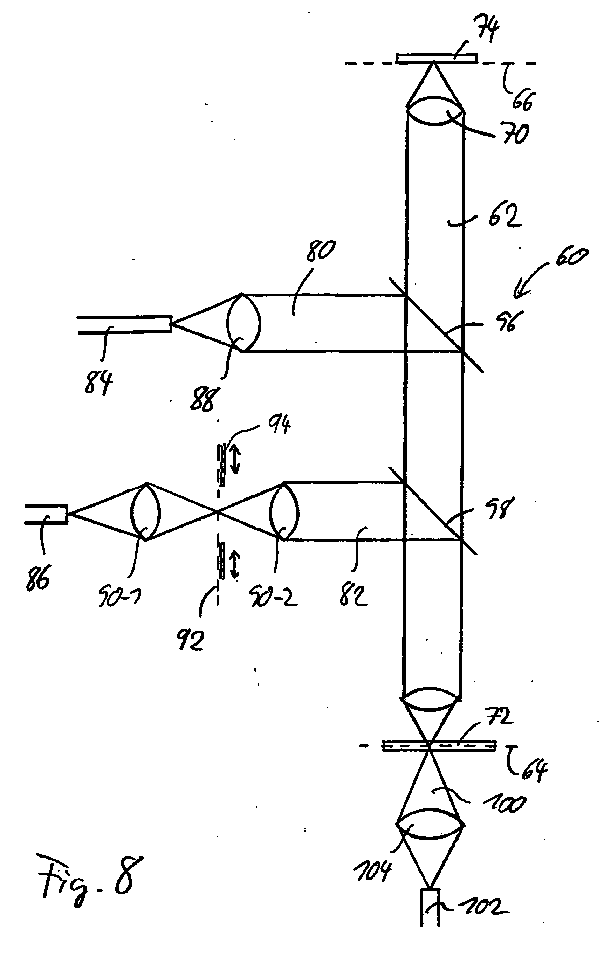

Fig. 8 zeigt eine Ausführungsvariante, bei der im Beleuchtungsstrahlengang 82 eine Zwischenbildebene 92 vorgesehen ist, in der Masken oder Muster angeordnet werden können, um gezielt bestimmte Bereiche des Objekts 72 zur Aktivierung von Käfigverbindungen mit UV-Licht beleuchten zu können. Zur gezielten Beleuchtung von bestimmten Bereichen kann ferner auch eine verstellbare Blende 94 im Auflicht-Beleuchtungsstrahlengang 82, genauer in der Zwischenbildebene 92 oder in enger Nachbarschaft hierzu, vorgesehen sein. Die Zwischenbildebene 92 wird durch eine Abbildungsanordnung 90-1 und 90-2 gebildet, die in Fig. 8 durch zwei Linsen repräsentiert ist.

Ein durch eine Maske oder ein Muster in der Zwischenbildebene 92 definiertes Bild kann relativ zum Seefeld fest eingestellt sein. In diesem Fall ist es zweckmäßig, wenn das Untersuchungsobjekt 72 etwa mit einem Mikroskoptisch relativ zum Strahlengang verstellbar ist. Eine andere Möglichkeit ist, dass die jeweilige Maske bzw. das jeweilige Muster in der Zwischenbildebene 92 verstellbar ist oder dass das Abbild dieser Maske in der Objektebene auf optischem Wege (etwa mittels einer Ablenkoptik) verstellbar ist.

Man kann eine Anpassung einer jeweiligen Maske an das jeweilige Untersuchungsobjekt vorsehen, beispielsweise auf Grundlage einer Überblicksaufnahme des Objekts, etwa um in einer zu untersuchenden Zelle eine Region zu definieren, in der die Zelle mit den freigesetzten Käfigverbindungen behandelt werden soll. Infolge der Freisetzung der Käfigverbindungen kommt es zu Veränderungen im Objekt, die sich im Wege der Erfassung des von dem Objekt ausgehenden Fluoreszenzlichts direkt oder indirekt beobachten lassen. Vorteilhaft kann mittels eines Detektorfelds 74 ein entsprechend zweidimensionales Bild auf einem Bildschirm dargestellt werden.

Die hier angesprochenen messtechnischen Anwendungen sind nur als Beispiele zu verstehen. Es können auch andere Untersuchungen, z. B. FRAP-Experimente, durchgeführt werden.

Nachzutragen zu den Mikroskopanordnungen gemäß Fig. 7 und 8 ist noch, dass die beiden Auflicht-Strahlengänge 80 und 82 teilweise mit dem Beobachtungsstrahlengang 62 zusammenfallen. Hierzu sind zwei dichroitische Spiegel 96 und 98 vorgesehen, die die Beleuchtungswellenlängen des aus dem Lichtleiter 84 bzw. 86 eingestrahlten Lichts in den Beobachtungsstrahlengang 62 einspiegeln, aber vom Objekt 72 ausgehendes Fluoreszenzlicht in Richtung zur Bildebene 66 durchlassen.

In Fig. 7 ist gestrichelt zusätzlich noch die Möglichkeit aufgezeigt, dass mehrere Auflicht-Beleuchtungsstrahlengänge, nämlich die Auflicht-Beleuchtungsstrahlengänge 80 und 82', vor Einspiegelung in den Beobachtungsstrahlengang 62 mittels eines dichroitischen Spiegels 98' zusammengeführt und dann gemeinsam durch den dichroitischen Spiegel 96 in den Beobachtungsstrahlengang 63 eingespiegelt werden können. Der Auflicht-Strahlengang 82' (mit zugeordnetem Lichtleiter 86' und zugeordneter Abbildungsoptik 90') kann insoweit den Auflicht-Strahlengang 82 ersetzen oder zusätzlich zu diesem vorgesehen sein.

Die Mikroskopanordnungen 60 der Fig. 7 und 8 weisen zusätzlich noch jeweils einen Durchlicht-Strahlengang 100 auf, der mittels eines Lichtleiters 102 mit Beleuchtungslicht aus einer erfindungsgemäßen Beleuchtungsvorrichtung versorgt werden kann. Der Lichtleiter 102 kann beispielsweise einem der Ausgangs-Lichtleiter 34 bzw. 34-1 oder 34-2 der Ausführungsbeispiele der Fig. 1 bis 5 entsprechen. Es kann sich ferner auch um einen Lichtleiter handeln, der einem gegenüber diesen Ausführungsbeispielen zusätzlichen dritten Ausgangs-Lichtleiter entspricht.

Die Durchlicht-Beleuchtung des Objekts 72 kann beispielsweise derart erfolgen, dass mittels einer entsprechenden Optik 104 das Ausgangsende des Lichtleiters 102 in die Objektebene 64 abgebildet wird. Es sind auch andere im Fachgebiet bekannte Beleuchtungsarten geeignet.

Es wird beispielsweise gedacht, den Durchlicht-Beleuchtungsstrahlengang 100 in Kombination mit dem Auflicht-Beleuchtungsstrahlengang 80 zu verwenden, um bei einer Untersuchung, insbesondere beispielsweise speziell für eine Bildaufnahme, zwischen einer Beleuchtung "Auflicht-Fluoreszenz" und einem "Durchlicht-Kontrastverfahren" umschalten zu können.

## Patentansprüche

1. Beleuchtungsvorrichtung für eine Optische Objektuntersuchungseinrichtung, die ein Mikroskop mit einem Objektbereich (64), in dem ein zu untersuchendes Objekt (72) plazierbar ist, einen Beobachtungsstrahlengang (62), der vom Objektbereich zu einem Bildbereich (66) führt, und wenigstens einen sich an einen Lichteingang (84, 86, 102) anschließenden Beleuchtungsstrahlengang (80, 82, 100), über den der Objektbereich beleuchtbar ist, umfasst, umfassend:
- eine Lichtquelle (12);
- optische Komponenten (16-1, 18-1, 20-1, 16-2, 18-2, 20-2), die eine Mehrzahl von von der Lichtquelle (14-1, 14-2; 14-1, 14-2, 14-3) ausgehenden Lichtwegen definieren;
- in wenigstens einem der Lichtwege eine Lichtkonditionieranordnung (22-1 bzw. 22-2 bzw. 22-3),
- wenigstens einen Lichtausgang (34; 34-1,34-2), an dem das mit Licht bzw. konditioniertem Licht zu versorgende Mikroskop (40; 60) angeschlossen oder anschließbar ist;
- wenigstens eine Lichtwegauswahleinheit (24; 24, 25), die mehrere jeweils einem anderen der Lichtwege zugehörige Eingangslichtwegabschnitte und wenigstens einen zu dem Lichtausgang bzw. zu einem zugeordneten der Lichtausgänge führenden Ausgangslichtwegabschnitt aufweist;
- eine die Lichtwegauswahleinheit ansteuerende Steuereinheit, mittels der die Lichtwegauswahleinheit derart wahlweise zwischen mehreren Auswahlzuständen verstellbar ist, dass wahlweise jeder der Lichtwege in einem entsprechenden Auswahlzustand der Lichtwegauswahleinheit als ausgewählter Lichtweg über den Ausgangslichtwegabschnitt mit dem Lichtausgang oder über einen vorgegebenen oder ausgewählten Ausgangslichtwegabschnitt mit einem vorgegebenen oder ausgewählten Lichtausgang verbindbar ist, um das Mikroskop mit Licht bzw. konditioniertem Licht aus dem ausgewählten Lichtweg zu versorgen,
wobei die Steuereinheit dafür ausgelegt ist, die Lichtwegauswahleinheit (24; 24, 25) in einer gewählten Zeitabfolge nach einem vorgebbaren Auswahlprogramm definiert zwischen ihren Auswahlzuständen zu verstellen und dabei definierte Verstellzeiten für die Verstellung der Lichtwegauswahleinheit zwischen ihren Auswahlzuständen vorzusehen, und
wobei die Lichtwegauswahleinheit (24) wenigstens ein zwischen mehreren Auswahlstellungen verstellbares optisches Lichtablenkelement (26) aufweist, wobei jeder Auswahlzustand auf Grundlage wenigstens einer Auswahlstellung des Lichtablenkelements realisierbar ist, indem im jeweiligen Auswahlzustand über den zugeordneten ausgewählten Lichtweg einfallendes Licht in den Ausgangslichtwegabschnitt bzw. in den vorgegebenen oder ausgewählten Ausgangslichtwegabschnitt umgelenkt wird und über den bzw. einen jeweiligen nicht-ausgewählten Lichtweg einfallendes Licht nicht in den bzw. in keinen Ausganglichtwegabschnitt umgelenkt wird.

2. Beleuchtungsvorrichtung nach Anspruch 1, **dadurch gekennzeichnet, dass** die Lichtwegauswahleinheit (24; 24, 25) in wenigstens einen Auswahlzustand verstellbar ist, in dem kein Lichtweg ausgewählt ist, so dass keiner der Lichtwege mit dem bzw. mit einem Lichtausgang verbunden ist.

3. Beleuchtungsvorrichtung nach Anspruch 1 oder 2, **dadurch gekennzeichnet, dass** die Lichtwegauswahleinheit (24) wenigstens einen mittels eines Stellglieds (28) schwenkbar oder drehbar angeordneten Spiegel (26) umfasst.

4. Beleuchtungsvorrichtung nach Anspruch 3, **dadurch gekennzeichnet, dass** das Stellglied als Galvanometer (28) ausgeführt ist.

5. Beleuchtungsvorrichtung nach einem der Ansprüche 1 bis 4, **dadurch gekennzeichnet, dass** die Lichtwegauswahleinheit wenigstens eine mikromechanische Verstellspiegelanordnung mit einer Vielzahl von mikromechanischen Verstellspiegeln aufweist, die auf elektrischem Wege ansteuerbar ist, um die Verstellspiegel oder ausgewählte der Verstellspiegel zwischen mehreren Auswahlstellungen zu verstellen.

6. Beleuchtungsvorrichtung nach Anspruch 5, **dadurch gekennzeichnet, dass** die Verstellspiegel als Schwenkspiegel ausgeführt sind.

7. Beleuchtungsvorrichtung nach einem der Ansprüche 1 bis 6, **dadurch gekennzeichnet, dass** die Lichtkonditionieranordnung (22-1, 22-2; 22-1, 22-2, 22-3) eine optische Wellenlängenselektionsanordnung umfasst, mittels der wenigstens eine vorgegebene oder einstellbare Selektionswellenlänge, vorzugsweise genau eine vorgegebene oder einstellbare Selektionswellenlänge, mit einer vorgegebenen oder einstellbaren Selektionsbandbreite für eine Propagation in Richtung zur Lichtwegauswahleinheit (24 bzw. 25) selektierbar ist.

8. Beleuchtungsvorrichtung nach Anspruch 7, **dadurch gekennzeichnet, dass** in jedem der Lichtwege (14-1, 14-2; 14-1, 14-2, 14-3) eine eine jeweilige Wellenlängenselektionsanordnung umfassende Lichtkonditionieranordnung (22-1, 22-2; 22-1, 22-2, 22-3) vorgesehen ist, mittels der in den Lichtwegen unterschiedliche Selektionswellenlängen für eine Propagation in Richtung zur Lichtwegauswahleinheit selektierbar sind.

9. Beleuchtungsvorrichtung nach einem der Ansprüche 1 bis 8, **dadurch gekennzeichnet, dass** die Lichtkonditionieranordnung eine optische Polarisatoranordnung umfasst.

10. Beleuchtungsvorrichtung nach einem der Ansprüche 1 bis 9, **dadurch gekennzeichnet, dass** die Lichtkonditionieranordnung eine verstellbare optische Intensitätsabschwächungsanordnung oder Strahlenbündelabschattungsanordnung (50) zur Einstellung einer Ausgangsintensität am Lichtausgang aufweist.

11. Beleuchtungsvorrichtung nach einem der Ansprüche 1 bis 10, **gekennzeichnet durch** wenigstens eine der Lichtwegauswahleinheit zugeordnete Lichtfalle (36), mit der ein nicht ausgewählter Lichtweg über die Lichtwegauswahleinheit verbindbar ist, oder/und **durch** eine optische Verschlußanordnung in wenigstens einem der Lichtwege oder Lichtwegabschnitte.

12. Beleuchtungsvorrichtung nach einem der Ansprüche 1 bis 11, **dadurch gekennzeichnet, dass** genau ein Lichtausgang (34) vorgesehen ist, mit dem mittels der Lichtwegauswahleinheit vorzugsweise genau ein ausgewählter der Lichtwege verbindbar ist.

13. Beleuchtungsvorrichtung nach einem der Ansprüche 1 bis 11, **dadurch gekennzeichnet, dass** wenigstens zwei Lichtausgänge (34-1, 34-2) vorgesehen sind, und dass mittels der Lichtwegauswahleinheit oder mittels wenigstens zwei gesonderten Lichtwegauswahleinheiten (24, 25) gleichzeitig wenigsten zwei ausgewählte Lichtwege mit einem jeweiligen der Lichtausgänge verbindbar sind.

14. Beleuchtungsvorrichtung nach einem der Ansprüche 1 bis 13, **dadurch gekennzeichnet, dass** wenigstens zwei Lichtwegauswahleinheiten (24, 25) in einander zugeordnete Auswahlzustände verstellbar sind, derart, dass ein ausgewählter der Lichtwege über diese Lichtwegauswahleinheiten mit dem Lichtausgang bzw. einem vorgegebenen oder ausgewählten Lichtausgang verbunden ist.

15. Beleuchtungsvorrichtung nach einem der Ansprüche 1 bis 14, **dadurch gekennzeichnet, dass** mehr als zwei Lichtwege (14-1, 14-2, 14-2) vorgesehen sind.

16. Beleuchtungsvorrichtung nach einem der Ansprüche 1 bis 15, **dadurch gekennzeichnet, dass** als die Lichtwege definierende optische Komponenten reflektive Komponenten (18-1, 20-1, 18-2, 20-2) oder/und refraktive Komponenten (16-1, 16-2) oder/und diffraktive Komponenten vorgesehen sind.

17. Beleuchtungsvorrichtung nach einem der Ansprüche 1 bis 16, **dadurch gekennzeichnet, dass** als die Lichtwege definierende optische Komponenten Spiegel (18-1, 20-1, 18-2, 20-2) oder/und Linsen (16-1, 16-2) oder/und Blenden vorgesehen sind.

18. Beleuchtungsvorrichtung nach einem der Ansprüche 1 bis 17, **dadurch gekennzeichnet, dass** die Lichtwege zumindest zwischen der Lichtquelle und der Lichtwegauswahleinheit als nicht an ein den Lichtweg definierendes Medium gebundene Freistrahlungs-Lichtwege (14-1, 14-2; 14-1, 14-2, 14-3) ausgeführt sind.

19. Beleuchtungsvorrichtung nach einem der Ansprüche 1 bis 18, **dadurch gekennzeichnet, dass** der Lichtausgang bzw. die Lichtausgänge auf Grundlage eines (jeweiligen) Lichtleiters (34; 34-1, 34-2) gebildet sind.

20. Beleuchtungsvorrichtung nach einem der Ansprüche 1 bis 19, **dadurch gekennzeichnet, dass** die Steuereinheit die Lichtkonditionieranordnung oder Lichtkonditionieranordnungen ansteuert.

21. Optische Objektuntersuchungseinrichtung, umfassend ein Mikroskop mit einem Objektbereich (64), in dem ein zu untersuchendes Objekt (72) plazierbar ist, einem Beobachtungsstrahlengang (62), der vom Objektbereich zu einem Bildbereich (66) führt, und wenigstens einem sich an einen Lichteingang (84, 86, 102) anschließenden Beleuchtungsstrahlengang (80, 82, 100), über den der Objektbereich beleuchtbar ist, und eine eine Lichtquelle (12) aufweisende Beleuchtungsvorrichtung (10), die mit einem Lichtausgang (34 bzw. 34-1 bzw. 34-2) am Lichteingang angeschlossen oder anschließbar ist,
**dadurch gekennzeichnet,**
**dass** die Beleuchtungsvorrichtung optische Komponenten (16-1, 18-1, 20-1, 16-2, 18-2, 20-2) aufweist, die eine Mehrzahl von von der Lichtquelle (14-1, 14-2; 14-1, 14-2, 14-3) ausgehenden Lichtwegen definieren;
**dass** in wenigstens einem der Lichtwege eine Lichtkonditionieranordnung (22-1 bzw. 22-2 bzw. 22-3) angeordnet ist, um über den Lichtausgang das Mikroskop mit konditioniertem Licht zu versorgen;
**dass** die Beleuchtungsvorrichtung wenigstens eine Lichtwegauswahleinheit (24; 24, 25) aufweist, die mehrere jeweils einem anderen der Lichtwege zugehörige Eingangslichtwegabschnitte und wenigstens einen zu dem Lichtausgang bzw. zu einem zugeordneten mehrerer Lichtausgänge der Beleuchtungsvorrichtung führenden Ausgangslichtwegabschnitt aufweist;
**dass** eine die Lichtwegauswahleinheit ansteuerende Steuereinheit vorgesehen ist, mittels der die Lichtwegauswahleinheit derart wahlweise zwischen mehreren Auswahlzuständen verstellbar ist, dass wahlweise jeder der Lichtwege in einem entsprechenden Auswahlzustand der Lichtwegauswahleinheit als ausgewählter Lichtweg über den Ausgangslichtwegabschnitt mit dem Lichtausgang oder über einen vorgegebenen oder ausgewählten Ausgangslichtwegabschnitt mit einem vorgegebenen oder ausgewählten Lichtausgang verbindbar ist, um das Mikroskop mit Licht bzw. konditioniertem Licht aus dem ausgewählten Lichtweg zu versorgen;
**dass** die Steuereinheit dafür ausgelegt ist, die Lichtwegauswahleinheit (24; 24, 25) in einer gewählten Zeitabfolge nach einem vorgebbaren Auswahlprogramm definiert zwischen ihren Auswahlzuständen zu verstellen und dabei definierte Verstellzeiten für die Verstellung der Lichtwegauswahleinheit zwischen ihren Auswahlzuständen vorzusehen; und
**dass** die Lichtwegauswahleinheit (24) wenigstens ein zwischen mehreren Auswahlstellungen verstellbares optisches Lichtablenkelement (26) aufweist, wobei jeder Auswahlzustand auf Grundlage wenigstens einer Auswahlstellung des Lichtablenkelements realisierbar ist, indem im jeweiligen Auswahlzustand über den zugeordneten ausgewählten Lichtweg einfallendes Licht in den Ausgangslichtwegabschnitt bzw. in den vorgegebenen oder ausgewählten Ausgangslichtwegabschnitt umgelenkt wird und über den bzw. einen jeweiligen nicht-ausgewählten Lichtweg einfallendes Licht nicht in den bzw. in keinen Ausganglichtwegabschnitt umgelenkt wird.

22. Objektuntersuchungseinrichtung nach Anspruch 21 **dadurch gekennzeichnet, dass** die Beleuchtungsvorrichtung (10) de Merkmale venigstens eines der Ansprüche 2 bis 20 aufweist.

23. Objektuntersuchungseinrichtung nach Anspruch 21 oder 22, **dadurch gekennzeichnet, dass** sie wenigstens einen Auflicht-Beleuchtungsstrahlengang, vorzugsweise wenigstens zwei Auflicht-Beleuchtungsstrahlengänge (80, 82), aufweist, der/die gewünschtenfalls zumindest teilweise mit dem Beobachtungsstrahlengang (62) zusammenfällt/ zusammenfallen.

24. Objektuntersuchtungseinrichtung nach einem der Ansprüche 21 bis 23, **dadurch gekennzeichnet, dass** sie wenigstens einen Durchlicht-Beleuchtungsstrahlengang (100) aufweist.

25. Objektuntersuchungseinrichtung einem der Ansprüche 21 bis 24, **dadurch gekennzeichnet, dass** sie wenigstens zwei, vorzugweise wenigsten drei Beleuchtungsstrahlengänge (80, 82, 100) aufweist, die alternativ oder - vorzugsweise - gleichzeitig mit Beleuchtungslicht von der Beleuchtungsvorrichtung (10) versorgbar sind.

26. Objektuntersuchungseinrichtung nach einem der Ansprüche 21 bis 25, **dadurch gekennzeichnet, dass** sie eine den Objektbereich (64), den Beobachtungsstrahlengang (62) und den wenigstens einen Beleuchtungsstrahlengang (80, 82, 100) aufweisende, das Mikroskop umfassende Fluoreszenz-Messvorrichtung (60) umfasst.

## Claims

1. An illuminator for an optical object investigation device, which comprises a microscope having an object area (64), in which an object (72) to be investigated may be placed, an observation beam path (62), which leads from the object area to an image area (66), and at least one illumination beam path (80,82,100) connected to a light input (84,86,102), by means of which illumination beam path the object area may be illuminated, comprising:
- a light source (12);
- optical components (16-1,18-1,20-1,16-2,18-2,20-2), which define a plurality of light paths (14-1,14-2;14-1,14-2,14-3) originating from the light source;
- a light conditioning arrangement (22-1 or 22-2 or 22-3 respectively) in at least one of the light paths,
- at least one light output (34;34-1,34-2), to which the microscope (40;60) to be supplied with light or conditioned light is connected or may be connected;
- at least one light path selector unit (24;24,25), which comprises a plurality of input light path portions assigned in each case to a different one of the light paths and at least one output light path portion leading to the light output or to an assigned one of the light outputs;
- a control unit controlling the light path selector unit, by means of which the light path selector unit may selectively be adjusted between a plurality of selector states, in such a way that, when the light path selector unit is in an appropriate selector state, each of the light paths may selectively be connected as selected light path via the output light path portion to the light output or via a predetermined or selected output light path portion to a predetermined or selected light output, in order to supply the microscope with light or conditioned light from the selected light path,
- wherein the control unit is designed to adjust the light path selector unit (24;24,25) in a selected time sequence in accordance with a predeterminable selection program in a defined manner between its selector states and to provide defined adjustment times for adjusting the light path selector unit between its selector states, and
- wherein the light path selector unit (24) comprises at least one optical light deflector element (26) adjustable between a plurality of selection positions, wherein each selector state may be achieved on the basis of at least one selection position of the light deflector element, light which is incident via the assigned selected light path being diverted in the respective selector state into the output light path portion or into the predetermined or selected output light path portion and light which is incident via the or a respective non-selected light path not being diverted into the or into any output light path portion.

2. An illuminator according to claim 1, **characterised in that** the light path selector unit (24;24,25) may be adjusted into at least one selector state in which no light path is selected, such that none of the light paths is connected to the or a light output.

3. An illuminator according to claim 1 or 2, **characterised in that** the light path selector unit (24) comprises at least one mirror (26) arranged to be swivellable or rotatable by means of an actuator (28).

4. An illuminator according to claim 3, **characterised in that** the actuator takes the form of a galvanometer (28).

5. An illuminator according to any one of claims 1 to 4, **characterised in that** the light path selector unit comprises at least one micromechanical adjusting mirror arrangement with a plurality of micromechanical adjusting mirrors, which may be controlled electrically in order to adjust the adjusting mirrors or selected ones of the adjusting mirrors between a plurality of selection positions.

6. An illuminator according to claim 5, **characterised in that** the adjusting mirrors take the form of swivel mirrors.

7. An illuminator according to any one of claims 1 to 6, **characterised in that** the light conditioning arrangement (22-1,22-2;22-1,22-2,22-3) comprises an optical wavelength selection arrangement, by means of which at least one predetermined or settable selection wavelength, preferably precisely one predetermined or settable selection wavelength, may be selected with a predetermined or settable selection bandwidth for propagation in the direction of the light path selector unit (24 or 25).

8. An illuminator according to claim 7, **characterised in that** in each of the light paths (14-1,14-2;14-1,14-2,14-3) there is provided a light conditioning arrangement (22-1,22-2;22-1,22-2,22-3) comprising a respective wavelength selection arrangement, by means of which light conditioning arrangement selection wavelengths differing with regard to light path may be selected for propagation in the direction of the light path selector unit.

9. An illuminator according to any one of claims 1 to 8, **characterised in that** the light conditioning arrangement comprises an optical polariser arrangement.

10. An illuminator according to any one of claims 1 to 9, **characterised in that** the light conditioning arrangement comprises an adjustable optical intensity attenuating arrangement or beam shading arrangement (50) for setting an output intensity at the light output.

11. An illuminator according to any one of claims 1 to 10, **characterised by** at least one light trap (36) assigned to the light path selector unit, to which light trap a non-selected light path may be connected via the light path selector unit and/or by an optical shutter arrangement in at least one of the light paths or light path portions.

12. An illuminator according to any one of claims 1 to 11, **characterised in that** precisely one light output (34) is provided, to which precisely one selected one of the light paths may preferably be connected by means of the light path selector unit.

13. An illuminator according to any one of claims 1 to 11, **characterised in that** at least two light outputs (34-1,34-2) are provided, and **in that** at least two selected light paths may be simultaneously connected to a respective one of the light outputs by means of the light path selector unit or by means of at least two separate light path selector units (24, 25).

14. An illuminator according to any one of claims 1 to 13, **characterised in that** at least two light path selector units (24,25) may be adjusted into mutually assigned selector states, in such a way that a selected one of the light paths is connected via these light path selector units to the light output or a predetermined or selected light output.

15. An illuminator according to any one of claims 1 to 14, **characterised in that** more than two light paths (14-1,14-2, 14-2) are provided.

16. An illuminator according to any one of claims 1to 15, **characterised in that** reflective components (18-1,20-1,18-2, 20-2) and/or refractive components (16-1,16-2) and/or diffractive components are provided as the optical components defining light paths.

17. An illuminator according to any one of claims 1 to 16, **characterised in that** mirrors (18-1,20-1,18-2,20-2) and/or lenses (16-1,16-2) and/or diaphragms are provided as the optical components defining light paths.

18. An illuminator according to any one of claims 1 to 17, **characterised in that** the light paths take the form, at least between the light source and the light path selector unit, of free radiation light paths (14-1,14-2;14-1,14-2,14-3) which are not bound to a medium which defines the light path.

19. An illuminator according to any one of claims 1 to 18, **characterised in that** the light output or the light outputs are formed on the basis of a (respective) light guide (34; 34-1,34-2).

20. An illuminator according to any one of claims 1 to 19, **characterised in that** the control unit controls the light conditioning arrangement or light conditioning arrangements.

21. An optical object investigation device, comprising a microscope having an object area (64), in which an object (72) to be investigated may be placed, an observation beam path (62), which leads from the object area to an image area (66), and at least one illumination beam path (80,82,100) connected to a light input (84,86,102), by means of which illumination beam path the object area may be illuminated, and comprising an illuminator (10) having a light source (12), which illuminator is connected or may be connected to the light input with a light output (34 or 34-1 or 34-2),
**characterised in**
**that** the illuminator comprises optical components (16-1,18-1,20-1,16-2,18-2,20-2), which define a plurality of light paths originating from the light source (14-1,14-2;14-1,14-2,14-3);
**that** in at least one of the light paths there is arranged a light conditioning arrangement (22-1 or 22-2 or 22-3 respectively), in order to supply the microscope with conditioned light via the light output;
**that** the illuminator comprises at least one light path selector unit (24;24,25), which comprises a plurality of input light path portions assigned in each case to a different one of the light paths and at least one output light path portion leading to the light output or to an assigned one of a plurality of light outputs of the illuminator;
**that** a control unit controlling the light path selector unit is provided, by means of which the light path selector unit may selectively be adjusted between a plurality of selector states in such a way that, when the light path selector unit is in an appropriate selector state, each of the light paths may selectively be connected as selected light path via the output light path portion to the light output or via a predetermined or selected output light path portion to a predetermined or selected light output, in order to supply the microscope with light or conditioned light from the selected light path;
**that** the control unit is designed to adjust the light path selector unit (24;24,25) in a selected time sequence in accordance with a predeterminable selection program in a defined manner between its selector states and to provide defined adjustment times for adjusting the light path selector unit between its selector states; and
**that** the light path selector unit (24) comprises at least one optical light deflector element (26) adjustable between a plurality of selection positions, wherein each selector state may be achieved on the basis of at least one selection position of the light deflector element, light which is incident via the assigned selected light path being diverted in the respective selector state into the output light path portion or into the predetermined or selected output light path portion and light which is incident via the or a respective non-selected light path not being diverted into the or into any output light path portion.

22. An object investigation device according to claim 21, **characterised in that** the illuminator (10) has the features of at least one of Claims 2 to 20.

23. An object investigation device according to claim 21 or 22, **characterised in that** it comprises at least one incident-light illumination beam path, preferably at least two incident-light illumination beam paths (80,82), which optionally coincide(s) at least in part with the observation beam path (62).

24. An object investigation device according to any one of claims 21 to 23, **characterised in that** it comprises at least one transmitted-light illumination beam path (100).

25. An object investigation device according to any one of claims 21 to 24, **characterised in that** it comprises at least two, preferably at least three illumination beam paths (80,82,100), which may be supplied alternately or (preferably) simultaneously with illumination light from the illuminator (10).

26. An object investigation device according to any one of claims 21 to 25, **characterised in that** it comprises a fluorescence measuring device (60) comprising the object area (64), the observation beam path (62) and the at least one illumination beam path (80,82,100) and including the microscope.

## Revendications

1. Dispositif d'éclairage pour un appareil optique d'examen d'objet qui comprend un microscope avec un logement d'objet (64), dans lequel l'objet à examiner (72) est placé, un trajet de faisceau d'observation (62) qui va du logement d'objet à une zone de visualisation (66) et au moins un trajet de faisceau d'éclairage (80, 82, 100) succédant à une entrée lumineuse (84, 86, 102), grâce auquel le logement d'objet peut être éclairé, comprenant :
- une source lumineuse (12) ;
- des composants optiques (16-1, 18-1, 20-1, 16-2, 18-2, 20-2) qui définissent une pluralité de trajets lumineux (14-1, 14-2 ; 14-1, 14-2, 14-3) partant de la source lumineuse ;
- dans au moins un des trajets lumineux, un dispositif de conditionnement de la lumière (22-1 ou 22-2 ou 22-3),
- au moins une sortie lumineuse (34 ; 34-1, 34-2) à laquelle est raccordé ou peut être raccordé le microscope (40 ; 60) alimenté en lumière ou en lumière conditionnée ;
- au moins une unité de sélection du trajet lumineux (24 ; 24, 25) qui comprend plusieurs sections d'entrée de trajets lumineux correspondant chacune à un des trajets lumineux et au moins une section de sortie de trajet lumineux conduisant à la sortie lumineuse ou à une des sorties lumineuses correspondantes ;
- une unité de commande permettant de contrôler l'unité de sélection du trajet lumineux, à l'aide de laquelle l'unité de sélection du trajet lumineux peut être réglée au choix entre plusieurs états de sélection, de façon à ce que chacun des trajets lumineux puisse être relié, dans un état de sélection correspondant de l'unité de sélection du trajet lumineux, en tant que trajet lumineux sélectionné, à la sortie lumineuse par l'intermédiaire de la section de sortie de trajet lumineux ou à une sortie lumineuse prédéterminée ou sélectionnée par l'intermédiaire d'une section de sortie de trajet lumineux prédéterminée ou sélectionnée, afin d'alimenter le microscope en lumière ou en lumière conditionnée provenant du trajet lumineux sélectionné,
moyennant quoi l'unité de commande est conçue pour régler l'unité de sélection de trajet lumineux (24 ; 24, 25) selon une séquence sélectionnée et selon un programme de sélection pouvant être prédéterminé, défini parmi ses états de sélection et pour prévoir des temps de réglage définis pour le réglage de l'unité de sélection de trajet lumineux parmi ses états de sélection, et
moyennant quoi l'unité de sélection de trajet lumineux (24) comprend au moins un élément optique de déviation lumineuse (26) réglable sur plusieurs positions de sélection, chaque état de sélection étant réalisable sur la base d'au moins une position de sélection de l'élément de déviation lumineuse, la lumière du trajet lumineux sélectionné étant déviée, dans l'état de sélection défini, vers la section de sortie de trajet lumineux ou vers la section de sortie de trajet lumineux prédéterminée ou sélectionnée, ou bien la lumière du trajet lumineux non sélectionné n'étant pas déviée vers la section de sortie de trajet lumineux ou étant déviée vers aucune section de sortie du trajet lumineux.

2. Dispositif d'éclairage selon la revendication 1, **caractérisé en ce que** l'unité de sélection du trajet lumineux (24 ; 24, 25) est réglable sur au moins un état de sélection dans lequel aucun trajet lumineux n'est sélectionné, de façon à ce qu'aucun des trajets lumineux ne soit relié à la sortie lumineuse ou à une des sorties lumineuses.

3. Dispositif d'éclairage selon la revendication 1 ou 2, **caractérisé en ce que** l'unité de sélection de trajet lumineux (24) comprend au moins un miroir (26) réglable ou rotatif grâce à un actionneur (28).

4. Dispositif d'éclairage selon la revendication 3, **caractérisé en ce que** l'actionneur est conçu comme un galvanomètre (28).

5. Dispositif d'éclairage selon l'une des revendications 1 à 4, **caractérisé en ce que** l'unité de sélection de trajet lumineux comprend au moins un système micro-mécanique à miroirs réglable avec une pluralité de miroirs réglables micro-mécaniques, qui est contrôlable de manière électrique afin de régler les miroirs réglables ou des miroirs réglables sélectionnés entre plusieurs positions de sélection.

6. Dispositif d'éclairage selon la revendication 5, **caractérisé en ce que** les miroirs de réglage sont conçus comme des miroirs pivotants.

7. Dispositif d'éclairage selon l'une des revendications 1 à 6, **caractérisé en ce que** le dispositif de conditionnement de la lumière (22-1, 22-2 ; 22-1, 22-2, 22-3) comprend un dispositif de sélection de longueur d'onde à l'aide duquel une longueur d'onde prédéterminée ou réglable, de préférence une longueur d'onde exacte prédéterminée ou réglable, peut être sélectionnée avec une bande passante de sélection prédéterminée ou réglable pour une propagation en direction de l'unité de sélection de trajet lumineux (24 ou 25).

8. Dispositif d'éclairage selon la revendication 7, **caractérisé en ce que,** dans chacun des trajets lumineux (14-1, 14-2 ; 14-1, 14-2, 14-3), se trouve un dispositif de conditionnement de la lumière (22-1, 22-2 ; 22-1, 22-2, 22-3) comprenant un dispositif de sélection de longueur d'onde à l'aide duquel différentes longueurs d'ondes peuvent être sélectionnées dans les trajets lumineux pour une propagation en direction de l'unité de sélection de trajet lumineux.

9. Dispositif d'éclairage selon l'une des revendications 1 à 8, **caractérisé en ce que** le dispositif de conditionnement de la lumière comprend un disposition de polarisation optique.

10. Dispositif d'éclairage selon l'une des revendications 1 à 9, **caractérisé en ce que** le dispositif de conditionnement de la lumière comprend un dispositif d'atténuation d'intensité optique réglable ou un dispositif d'obscurcissement du faisceau (50) pour le réglage d'une intensité de sortie au niveau de la sortie de la lumière.

11. Dispositif d'éclairage selon l'une des revendications 1 à 10, **caractérisé en ce qu'**au moins un des pièges lumineux (36) correspondant à l'unité de sélection de trajet lumineux, avec lesquels un trajet lumineux non sélectionnable peut être relié par l'intermédiaire de l'unité de sélection de trajet lumineux, et/ou par un dispositif d'obturation optique dans au moins un des trajets lumineux ou une des sections de trajets lumineux.

12. Dispositif d'éclairage selon l'une des revendications 1 à 11, **caractérisé en ce qu'**exactement une sortie lumineuse (34) est prévue, avec laquelle, grâce à l'unité de sélection de trajet lumineux, de préférence exactement un trajet lumineux sélectionné peut être relié.

13. Dispositif d'éclairage selon l'une des revendications 1 à 11, **caractérisé en ce qu'**au moins deux sorties lumineuses (34-1, 34-2) sont prévues et **en ce que**, grâce à l'unité de sélection de trajet lumineux ou grâce à au moins deux unités de sélection de trajets lumineux séparées (24, 25) au moins deux trajets lumineux sélectionnés peuvent être reliés simultanément avec une des sorties lumineuses.

14. Dispositif d'éclairage selon l'une des revendications 1 à 13, **caractérisé en ce qu'**au moins deux unités de sélection de trajets lumineux (24, 25) sont réglables dans des états de sélection mutuellement correspondants, de façon à ce qu'un des trajets lumineux sélectionnés soit relié, par l'intermédiaire des ces unités de sélection de trajets lumineux, avec la sortie lumineuse ou une sortie lumineuse prédéterminée ou sélectionnée.

15. Dispositif selon l'une des revendications 1 à 14, **caractérisé en ce que** plus de deux trajets lumineux (14-1, 14-2, 14-2) sont prévus.

16. Dispositif d'éclairage selon l'une des revendications 1 à 15, **caractérisé en ce que,** en tant que composants optiques définissant les trajets lumineux, des composants réflecteurs (18-1, 20-1, 18-2, 20-2) et/ou des composants réfracteurs (16-1, 16-2) et/ou des composants diffracteurs sont prévus.

17. Dispositif d'éclairage selon l'une des revendications 1 à 16, **caractérisé en ce que,** en tant que composants optiques définissant les trajets lumineux, des miroirs (18-1, 20-1, 18-2, 20-2) et/ou des lentilles (16-1, 16-2) et/ou des diaphragmes sont prévus.

18. Dispositif d'éclairage selon l'une des revendications 1 à 17, **caractérisé en ce que** les trajets lumineux sont réalisés, au moins entre la source lumineuse et l'unité de sélection de trajet lumineux, comme des trajets lumineux à rayonnement libre non liés à un milieu définissant le trajet lumineux (14-1, 14-2 ; 14-1, 14-2, 14-3).

19. Dispositif d'éclairage selon l'une des revendications 1 à 18, **caractérisé en ce que** la sortie lumineuse ou les sorties lumineuses sont conçues sur la base d'un conduit de lumière (correspondant) (34 ; 34-1, 34-2).

20. Dispositif d'éclairage selon l'une des revendications 1 à 19, **caractérisé en ce que** l'unité de commande contrôle le dispositif de conditionnement de la lumière ou les dispositifs de conditionnement de la lumière.

21. Appareil optique d'examen d'objet comprenant un microscope avec un logement d'objet (64), dans lequel l'objet à examiner (72) est placé, un trajet de faisceau d'observation (62) qui va du logement d'objet à une zone de visualisation (66) et au moins un trajet de faisceau d'éclairage (80, 82, 100) succédant à une entrée lumineuse (84, 86, 102), grâce auquel le logement d'objet peut être éclairé, et un dispositif d'éclairage (10) comprenant une source lumineuse (12), raccordé ou pouvant être raccordé avec une sortie lumineuse (34, 34-1 ou 34-2) à l'entrée lumineuse,
**caractérisé en ce que**
le dispositif d'éclairage comprend des composants optiques (16-1, 18-1, 20-1, 16-2, 18-2, 20-2) définissant une pluralité de trajets lumineux partant de la source lumineuse (14-1, 14-2 ; 14-1, 14-2, 14-3) ;
dans au moins un des trajets lumineux, se trouve un dispositif de conditionnement de la lumière (22-1, 22-2 ou 22-3) afin d'alimenter le microscope en lumière conditionnée par l'intermédiaire de la sortie lumineuse ;
le dispositif d'éclairage comprend au moins une unité de sélection de trajet lumineux (24 ; 24, 25) qui comprend plusieurs sections de trajets lumineux d'entrée correspondant chacun à un trajet lumineux et au moins une section de trajet lumineux de sortie conduisant à la sortie lumineuse ou à une des sorties lumineuses du dispositif d'éclairage ;
une unité de commande contrôlant l'unité de sélection de trajet lumineux est prévue, à l'aide de laquelle l'unité de sélection de trajet lumineux est réglable entre plusieurs états de sélection de façon à ce que chacun des trajets lumineux puisse être relié, dans un état de sélection de l'unité de sélection de trajet lumineux, avec la sortie lumineuse par l'intermédiaire de la section de trajet lumineux de sortie ou avec une sortie lumineuse prédéterminée ou sélectionnée par l'intermédiaire d'une section de trajet lumineux de sortie prédéterminée ou sélectionnée, afin d'alimenter le microscope en lumière ou en lumière conditionnée provenant du trajet lumineux sélectionné ;
l'unité de commande est conçue de façon à régler l'unité de sélection de trajet lumineux (24 ; 24, 25) sur ses états de sélection de manière définie selon une séquence chronologique choisie et selon un programme de sélection prédéterminé, et de façon à prévoir des temps de réglage définis pour le réglage de l'unité de sélection de trajets lumineux entre ses états de sélections ; et
l'unité de sélection de trajet lumineux (24) comprend au moins un élément optique de déviation lumineuse (26) réglable entre plusieurs positions de sélection, chaque état de sélection étant réalisable sur la base d'au moins une position de sélection de l'élément de déviation lumineuse, du fait que dans l'état de sélection concerné, la lumière arrivant par le trajet lumineux sélectionné correspondant est déviée vers la section de trajet lumineux de sortie ou vers la section de trajet lumineux de sortie prédéterminée ou sélectionnée ou bien la lumière arrivant par un trajet lumineux non sélectionné n'est pas dévié vers la section de trajet lumineux de sortie ou vers aucune section de trajet lumineux de sortie.

22. Dispositif d'examen d'objet selon la revendication 21, **caractérisé en ce que** le dispositif d'éclairage (10) présente les caractéristiques d'au moins une des revendications 2 à 20.

23. Dispositif d'examen d'objet selon la revendication 21 ou 22, **caractérisé en ce qu'**il comprend au moins un parcours optique d'éclairage à lumière incidente, de préférence au moins deux parcours optiques d'éclairage à lumière incidente (80, 82), qui coïncide(nt), le cas échéant, au moins partiellement avec le parcours optique d'observation (62).

24. Dispositif d'examen d'objet selon l'une des revendications 21 à 23, **caractérisé en ce qu'**il comprend au moins un parcours optique d'éclairage par transparence (100).

25. Dispositif d'examen d'objet selon l'une des revendications 21 à 24, **caractérisé en ce qu'**il comprend au moins deux, de préférence au moins trois parcours optiques d'éclairage (80, 82 100) pouvant être alimentés en alternance ou, de préférence, simultanément avec la lumière d'éclairage provenant du dispositif d'éclairage (10).

26. Dispositif d'examen d'objet selon l'une des revendications 21 à 25, **caractérisé en ce qu'**il comprend un dispositif de mesure de la fluorescence (60) comprenant le logement d'objet (64), le parcours optique d'observation (62), au moins un parcours optique d'éclairage (80, 82, 100) et le microscope.
